# EUROPEAN PATENT APPLICATION

(11) **EP 3 181 619 A1**
(43) Date of publication of application: **21.06.2017**
(21) Application number: 15832469.9
(22) Date of filing: 22.07.2015
(51) Int. Cl.: C08J 5/22, B01J 39/20, B01J 41/14, B01J 47/12, B01D 61/46, B01D 71/28, B01D 71/40

(54) **POLYMER FUNCTIONAL FILM, PRODUCTION METHOD THEREOF, AND STACK OR DEVICE PROVIDED WITH POLYMER FUNCTIONAL FILM**

(30) Priority: 14.08.2014 JP 2014165309; 12.06.2015 JP 2015119497
(71) Applicant: Fujifilm Corporation, Minato-ku Tokyo 106-8620 (JP)
(72) Inventor: HARADA, Motoi, Kanagawa 258-8577 (JP); TAKAMOTO, Tetsufumi, Kanagawa 258-8577 (JP)
(74) Representative: Hoffmann Eitle
(86) International application number: PCT/JP2015/070807
(87) International publication number: WO 2016/024464

(57) **Abstract**

This polymer functional film comprises a surface layer and a negative ion exchange membrane or positive ion exchange membrane, and the surface layer contains a polymer that includes a cross-linked structure having, in the cross-linking portion, an ionic group of the charge opposite of the charge of the ionic goup of at least the negative ion exchange membrane or positive ion exchange membrane. Also provided are a method of producing said polymer functional film, and a stack or device provided with said polymer functional film.

## Description

### BACKGROUND OF THE INVENTION

### 1. Field of the Invention

The present invention relates to a functional polymer membrane, a production method thereof, and a stack or a device provided with a functional polymer membrane.

### 2. Description of the Related Art

As a membrane having various functions as a functional polymer membrane, an ion exchange membrane, a reverse osmosis membrane, a forward osmosis membrane, or a gas separation membrane is known.

For example, an ion exchange membrane is used for electrodeionization (EDI), continuous electrodeionization (CEDI), electrodialysis (ED), electrodialysis reversal (EDR), and reverse electrodialysis (RED). Further, recently, an ion exchange membrane is used for a solid polymer electrolyte fuel cell.

Electrodeionization (EDI) is a water treatment process of removing ions from an aqueous liquid by using an ion exchange membrane for the purpose of ion transport and utilizing a potential. This water treatment process is different from a water purification technique such as ion exchange of the related art and can be used to produce ultrapure water without using chemicals such as an acid or caustic soda. Electrodialysis (ED) and electrodialysis reversal (EDR) are electrochemical separation processes of removing ions or the like from water and other fluids.

In recent years, since an increase in nitric acid ion concentration of groundwater has been a problem on a global scale, a method of removing nitric acid ions through electrodialysis using an ion exchange membrane has been attracting attention. Prevention of precipitation (scaling) of sparingly soluble salts due to sulfuric acid ions is an essential issue and thus it is important for the membrane to selectively transmit only nitric acid ions (monovalent ions) for efficient removal. Therefore, in electrodialysis, development of a technique of selectively transmitting only monovalent ions has been actively promoted.

For example, JP2001-49009A describes, as a technique of selectively transmitting only monovalent ions, a multilayer ion exchange membrane that has a layer with a charge opposite to a charge of an ionic group of an ion exchange membrane on one surface of the ion exchange membrane (hereinafter, such a layer is referred to as a "surface layer"). JP1996-231736A (JP-H08-231736A) describes a modified bipolar membrane respectively having an anionic substance and a cationic substance on the surface of the bipolar membrane on an anion exchange membrane side and a cation exchange membrane side.

### SUMMARY OF THE INVENTION

In JP2001-49009A, the surface layer is formed by coating the surface of the ion exchange membrane with a polymer solution prepared from a monofunctional monomer having a charge opposite to a charge of an ionic group of the ion exchange membrane. However, since the surface layer does not have a cross-linked structure and has high solubility in an aqueous solvent, the surface layer of the multilayer ion exchange membrane of JP2001-49009A is easily peeled off from the ion exchange membrane when the multilayer ion exchange membrane is used for electrodialysis or the like. Therefore, there is a problem in that the surface layer of the multilayer ion exchange membrane of JP2001-49009A is peeled off from the ion exchange membrane when the multilayer ion exchange membrane is continuously used for a long period of time. In addition, since it takes a long time to prepare this polymer solution, it takes a long time to prepare a multilayer ion exchange membrane.

Meanwhile, the bipolar membrane described in JP1996-231736A (JP-H08-231736A) does not have, on the surface of an ion exchange membrane, a layer with a charge opposite to the charge of an ionic group of the ion exchange membrane. Therefore, it is not intended to selectively transmit only monovalent ions using the bipolar membrane alone as the ion exchange membrane.

Accordingly, an object of the present invention is to provide a functional polymer membrane (hereinafter, the ion exchange membrane and the functional polymer membrane are also simply referred to as a "membrane") which is capable of selectively transmitting only monovalent ions and can be used as an ion exchange membrane whose surface layer is not peeled off from the ion exchange membrane even when continuously used for a long period of time, that is, the surface layer has excellent peeling resistance and a stack or a device provided with a functional polymer membrane. Further, another object of the present invention is to provide a method of producing a functional polymer membrane in which the polymerization curing time is shortened and which has mass production suitability.

As a result of intensive research conducted by the present inventors, it is found that the above-described problems can be solved by causing a polymerization curing reaction in a polyfunctional polymerizable monomer having an ionic group with a charge opposite to a charge of an ionic group of an ion exchange membrane, as a polymer of a polymer solution in order to form a surface layer. That is, it is found that a functional polymer membrane in which the surface layer is unlikely to be dissolved in an aqueous solvent, the adsorption power of the surface layer with respect to the ion exchange membrane is increased, and the peeling resistance of the surface layer is excellent can be obtained when a charged cross-linking monomer is used so that the surface layer has a cross-linked structure. Moreover, since this polyfunctional polymerizable monomer has an ion exchange group in advance, a membrane can be produced without carrying out a process for ionizing the surface layer and this is suitable for mass production in a short period of time. Further, it was found that the cross-linking monomer has a charge and thus the charge density of the surface layer is improved and divalent ions are repelled due to charge repulsion, and therefore the selectivity of monovalent ions is improved.

The present invention has been completed based on these findings.

<1> A functional polymer membrane comprising: a surface layer; and an anion exchange membrane or a cation exchange membrane, in which the surface layer contains a polymer which includes a cross-linked structure having, in a cross-linking unit, an ionic group with a charge opposite to a charge of an ionic group included in the anion exchange membrane or the cation exchange membrane.
<2> The functional polymer membrane according to <1>, in which the polymer which includes the anion exchange membrane and has the cross-linked structure includes an anionic group.
<3> The functional polymer membrane according to <1> or <2>, in which the polymer which includes the anion exchange membrane and has the cross-linked structure is a polymer having a cross-linked structure represented by the following Formula (NCL-1) or (NCL-2).

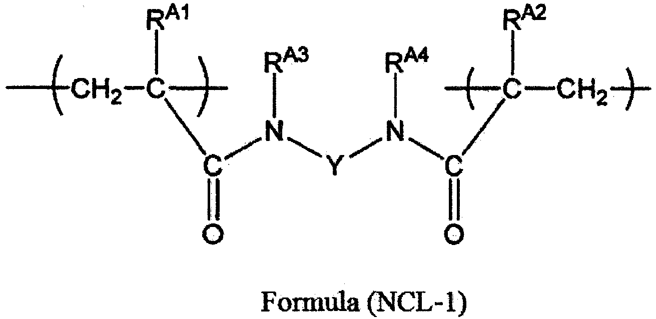

In Formula (NCL-1), R^{A1} and R^{A2} each independently represent a hydrogen atom or an alkyl group, R^{A3} and R^{A4} each independently represent a hydrogen atom or an alkyl group and R^{A3} and R^{A4} may form a 6- or 7-membered ring together with nitrogen atoms and Y adjacent to R^{A3} and R^{A4}, Y represents an alkylene group or an arylene group, R^{A1} to R^{A4} and Y include one to four -SO₃M's in total, and M represents a hydrogen atom, an organic base ion, or a metal ion.

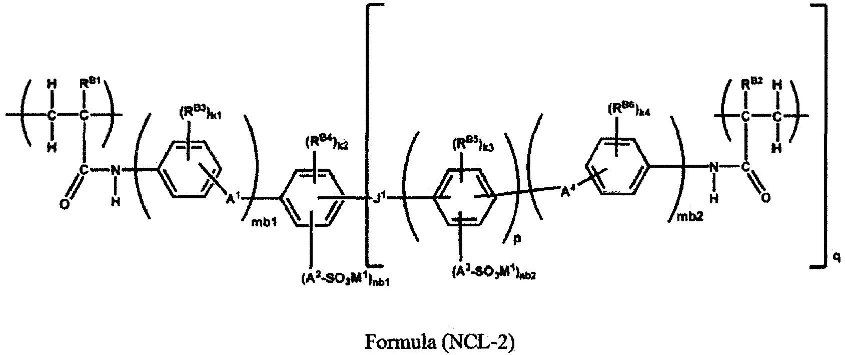

In Formula (NCL-2), R^{B1} and R^{B2} each independently represent a hydrogen atom or an alkyl group, R^{B3}, R^{B4}, R^{B5}, and R^{B6} each independently represent a substituent, k1, k2, k3, and k4 represent an integer of 0 to 4, and in a case where a plurality of R^{B3}'s, R^{B4}'s, R^{B5}'s, and R^{B6}'s are present, R^{B3}'s, R^{B4}'s, R^{B5}'s, and R^{B6}'s may be the same as or different from each other and may be bonded to each other to form a ring, A¹, A², A³, and A⁴ each independently represent a single bond or a divalent linking group, M¹ represents a hydrogen atom, an organic base ion, or a metal ion, nb1 and nb2 each independently represent an integer of 1 to 4, mb1 and mb2 each independently represent 0 or 1, J¹ represents a single bond, -O-, -S-, -SO₂-, -CO-, -CR^{B7}R^{B8}-, or an alkenylene group, R^{B7} and R^{B8} each independently represent a hydrogen atom, an alkyl group, or a halogen atom, p represents an integer of 1 or greater, and q represents an integer of 1 to 4.

<4> The functional polymer membrane according to <1>, in which the polymer which includes the cation exchange membrane and has the cross-linked structure includes a cationic group.
<5> The functional polymer membrane according to <1> or <4>, in which the polymer which includes the cation exchange membrane and has the cross-linked structure is a polymer having a cross-linked structure represented by the following Formula (PCL-1) or (PCL-2).

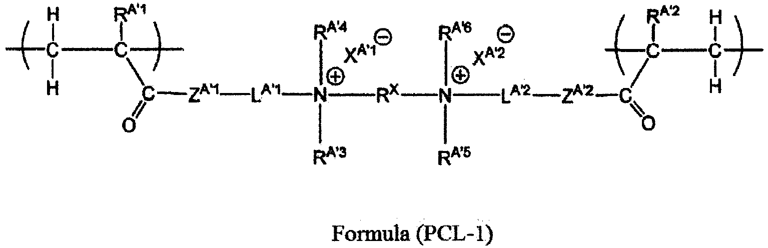

In Formula (PCL-1), R^{A'1} and R^{A'2} each independently represent a hydrogen atom or an alkyl group, R^{A'3} to R^{A'6} each independently represent an alkyl group or an aryl group, Z^{A'1} and Z^{A'2} each independently represent -O- or -NRa-, here, Ra represents a hydrogen atom or an alkyl group, L^{A'1} and L^{A'2} each independently represent an alkylene group, R^{X} represents an alkylene group, an alkenylene group, an alkynylene group, an arylene group, -O-, or a divalent linking group formed by combining these, and X^{A'1} and X^{A'2} each independently represent a halogen ion or an aliphatic or aromatic carboxylic acid ion.

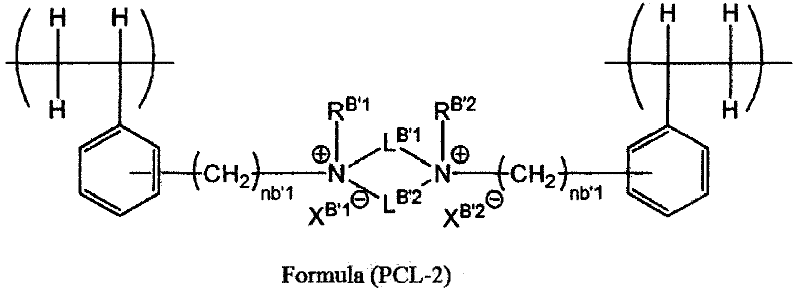

In Formula (PCL-2), L^{B'1} and L^{B'2} each independently represent an alkylene group or an alkenylene group, R^{B'1} and R^{B'2} each independently represent an alkyl group or an aryl group, R^{B'1} and R^{B'2} may be bonded to each other to form a ring, nb'1 represents an integer of 1 to 3, and X^{B'1-} and X^{B'2-} each independently represent an organic or inorganic anion.
<6> The functional polymer membrane according to any one of <1> to <5>, in which the surface layer is formed by photopolymerization.
<7> The functional polymer membrane according to any one of <1> to <6>, in which the thickness of the surface layer is 50% or less of the thickness of the anion exchange membrane or the cation exchange membrane.
<8> The functional polymer membrane according to <7>, in which the thickness of the surface layer is 20% or less of the thickness of the anion exchange membrane or the cation exchange membrane.
<9> The functional polymer membrane according to <8>, in which the thickness of the surface layer is 10% or less of the thickness of the anion exchange membrane or the cation exchange membrane.
<10> A stack comprising: the functional polymer membrane according to any one of claims 1 to 9.
<11> A device comprising: the functional polymer membrane according to any one of claims 1 to 9.
<12> A method of producing a functional polymer membrane which includes a surface layer and an anion exchange membrane or a cation exchange membrane, the method comprising: subjecting a polyfunctional polymerizable monomer having an ionic group with a charge opposite to a charge of an ionic group included in the anion exchange membrane or the cation exchange membrane to a polymerization curing reaction in the surface layer to form a polymer which has a cross-linked structure.

The "thickness of the functional polymer membrane" in the present specification indicates the thickness of the functional polymer membrane after being immersed in a 0.1 M NaCl aqueous solution at a temperature of 25°C for 12 hours.

In the present specification, the numerical ranges shown using "to" indicate ranges including the numerical values described before and after "to" as the lower limits and the upper limits.

Further, in each formula, in a case where a plurality of groups having the same symbol are present, these may be the same as or different from each other unless otherwise noted. Similarly, in a case where there are repetitions of a plurality of partial structures, these repetitions may be the same as each other or different repetitions may be mixed with each other in a defined range.

Further, for the convenience of description, geometric isomers which are substitution patterns of double bonds in each formula may indicate one isomer or may be an E-isomer or a Z-isomer or a mixture of these unless otherwise noted.

Furthermore, the term "substituent", when simply described, indicates a substituent of a substituent group α with reference to the substituents of the substituent group α unless otherwise noted.

In the present specification, a bi- or higher polyfunctional polymerizable monomer (charged cross-linking monomer) having an ionic group introduces the ionic group and plays a role of a cross-linking agent.

In the present specification, when the term "compound" is appended to the end of another term or a specific compound is described using the name or formula thereof, the meaning of compound includes salts and ions thereof in addition to the compound itself if the compound has a dissociable partial structure in the chemical structural formula. Further, in the present specification, when the term "group" related to a substituent is described by being appended to the end of another term or a specific compound is described using the name thereof, this means that the group thereof or the compound may include an arbitrary substituent.

According to the present invention, it is possible to provide a functional polymer membrane which is capable of selectively transmitting only monovalent ions and has excellent peeling resistance of a surface layer and a stack or a device provided with such a functional polymer membrane. The functional polymer membrane of the present invention has low electrical resistance of the membrane so that power consumption can be reduced through electrodialysis or the like. Further, according to the production method of the present invention, the functional polymer membrane can be obtained in an extremely short time.

### DESCRIPTION OF THE PREFERRED EMBODIMENTS

### «Functional polymer membrane»

A functional polymer membrane of the present invention includes a surface layer and an anion exchange membrane or a cation exchange membrane. In the present invention, the surface layer contains a polymer which includes a cross-linked structure having, in a cross-linking unit, an ionic group with a charge opposite to a charge of an ionic group included in at least one of the anion exchange membrane or the cation exchange membrane. Hereinafter, the surface layer in a case where the functional polymer membrane includes the anion exchange membrane is referred to as an anionic surface layer. Meanwhile, the surface layer in a case where the functional polymer membrane includes the cation exchange membrane is referred to as a cationic surface layer.

Moreover, in the present invention, the cross-linked structure having an ionic group in a cross-linking unit indicates a structure having an ionic group in at least one smallest repeating unit structure constituting a cross-linking portion, for example, a structural unit obtained from a polyfunctional polymerizable monomer (compound) having an ionic group accordingly, a polymer of the present invention is different from a polymer obtained from a polymerization reaction between a monofunctional polymerizable monomer (compound) which has an ionic group and a polyfunctional polymerizable monomer (compound) which does not have an ionic group.

Here, the term "monofunctional" means that one polymerizable group (preferably an ethylenically unsaturated group) is included and the term "polyfunctional" means that two or more polymerizable groups are included.

### (Surface layer)

### <Anionic surface layer>

Examples of an anionic group include a sulfo group or a salt thereof and a carboxy group or a salt thereof. Among these, a sulfo group or a salt thereof is preferable. The cross-linked structure is not particularly limited, but a cross-linked structure represented by the following Formula (NCL-1) or (NCL-2) is preferable.

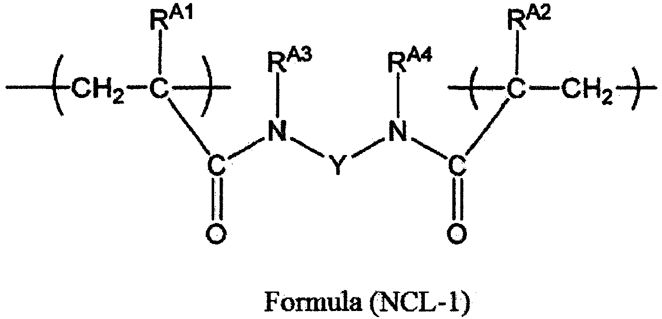

In Formula (NCL-1), R^{A1} and R^{A2} each independently represent a hydrogen atom or an alkyl group. R^{A3} and R^{A4} each independently represent a hydrogen atom or an alkyl group and R^{A3} and R^{A4} may form a 6- or 7-membered ring together with nitrogen atoms and Y adjacent to R^{A3} and R^{A4}. Y represents an alkylene group or an arylene group. R^{A1} to R^{A4} and Y include one to four -SO₃M's in total. M represents a hydrogen atom, an organic base ion, or a metal ion.

The alkyl group as R^{A1} to R^{A4} is a linear or branched alkyl group and the number of carbon atoms thereof is preferably in a range of 1 to 10, more preferably in a range of 1 to 5, and particularly preferably in a range of 1 to 3. Specific examples of the alkyl group include methyl, ethyl, isopropyl, t-butyl, n-octyl, 2-ethylhexyl, n-decyl, and n-hexadecyl. The alkyl group as R^{A1} to R^{A4} may include a substituent.

R^{A1} to R^{A4} each independently represent preferably a hydrogen atom or a methyl group and more preferably a hydrogen atom.

The alkylene group as Y is a linear or branched alkylene group and the number of carbon atoms thereof is preferably in a range of 1 to 9, more preferably in a range of 1 to 7, still more preferably in a range of 1 to 3, and particularly preferably 1. The alkylene group may include a substituent.

The number of carbon atoms of the arylene group as Y is preferably in a range of 6 to 12, more preferably in a range of 6 to 8, and particularly preferably 6. The arylene group may include a substituent.

The 6- or 7- membered ring formed by R^{A3} and R^{A4} together with nitrogen atoms and Y adjacent to R^{A3} and R^{A4} may be an aliphatic heterocycle or an aromatic heterocycle and may include a substituent.

Examples of the formed 6- or 7- membered ring include a pyrimidine ring and a dihydropyrazine ring.

R^{A1} to R^{A4} and Y include one to four -SO₃M's in total. R^{A1} to R^{A4} and Y may include -SO₃M in a substituent.

M represents a hydrogen ion, an organic base ion, or a metal ion. Examples of the organic base ion include organic base ions selected from ammonium ions (such as an ammonium ion, a methylammonium ion, a dimethylammonium ion, a trimethylammonium ion, a diethylammonium ion, a triethylammonium ion, and a dibenzylammonium ion) and organic heterocyclic ions (a nitrogen-containing heterocyclic ion is preferable, and a heterocycle in the nitrogen-containing heterocyclic ion is preferably a 5- or 6-membered ring, may be an aromatic ring or a simple heterocycle, may be fused with another ring such as a benzene ring or the like, and may form a spiro ring or a cross-linked ring, and examples thereof include a pyridinium ion, a N-methylimidazolium ion, a N-methylmorpholium ion, a 1,8-diazabicyclo[5.4.0]-7-undecanium ion, a 1,8-diazabicyclo[4.3.0]-7-nonenium ion, and a guanidinium ion). Examples of the metal ion include metal ions selected from alkali metal ions (such as a lithium ion, a sodium ion, and a potassium ion) and alkaline earth metal ions (such as a beryllium ion, a magnesium ion, or a calcium ion). Among these, alkali metal ions are preferable. In a case where a plurality of M's are present, the plurality of M's may be the same as or different from each other.

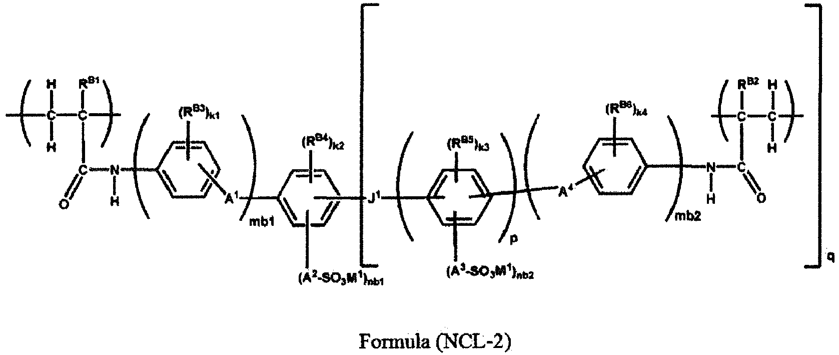

In Formula (NCL-2), R^{B1} and R^{B2} each independently represent a hydrogen atom or an alkyl group. The alkyl group is a linear or branched alkyl group and the number of carbon atoms thereof is preferably in a range of 1 to 10, more preferably in a range of 1 to 5, and particularly preferably in a range of 1 to 3. Specific examples of the alkyl group include methyl, ethyl, isopropyl, t-butyl, n-octyl, 2-ethylhexyl, n-decyl, and n-hexadecyl. The alkyl group as R^{B1} and R^{B2} may include a substituent.

R^{B1} and R^{B2} each independently represent preferably a hydrogen atom or a methyl group and more preferably a hydrogen atom.

R^{B3}, R^{B4}, R^{B5}, and R^{B6} each independently represent a substituent, and k1, k2, k3, and k4 represent an integer of 0 to 4. In a case where a plurality of R^{B3}'s, R^{B4}'s, R^{B5}'s, and R^{B6}'s are present, R^{B3}'s, R^{B4's}, R^{B5's}, and R^{B6}'s may be the same as or different from each other and may be bonded to each other to form a saturated or unsaturated fused ring.

As the substituent, a group selected from the following substituent group α is preferable and an alkyl group, an alkoxy group, or a halogen atom is more preferable. Here, as the alkyl group and the alkoxy group, an alkyl group and an alkoxy group substituted with a sulfo group or a salt thereof are preferable.

Examples of the substituent include groups selected from the following substituent group α.

### [Substituent group α]

The substituent group α includes:
an alkyl group (the number of carbon atoms of the alkyl group is preferably in a range of 1 to 30, more preferably in a range of 1 to 20, and particularly preferably in a range of 1 to 10, and examples thereof include methyl, ethyl, iso-propyl, tert-butyl, n-octyl, 2-ethylhexyl, n-decyl, and n-hexadecyl), a cycloalkyl group (the number of carbon atoms of the cycloalkyl group is preferably in a range of 3 to 30, more preferably in a range of 3 to 20, and particularly preferably in a range of 3 to 10, and examples thereof include cyclopropyl, cyclopentyl, and cyclohexyl), an alkenyl group (the number of carbon atoms of the alkenyl group is preferably in a range of 2 to 30, more preferably in a range of 2 to 20, and particularly preferably in a range of 2 to 10, and examples thereof include vinyl, allyl, 2-butenyl, and 3-pentenyl), an alkynyl group (the number of carbon atoms of the alkynyl group is preferably in a range of 2 to 30, more preferably in a range of 2 to 20, and particularly preferably in a range of 2 to 10, and examples thereof include propargyl and 3-pentynyl), an aryl group (the number of carbon atoms of the aryl group is preferably in a range of 6 to 30, more preferably in a range of 6 to 20, and particularly preferably in a range of 6 to 12, and examples thereof include phenyl, p-methylphenyl, naphthyl, and anthranyl), an amino group (such as an amino group, an alkylamino group, or an arylamino group; the number of carbon atoms of the amino group is preferably in a range of 0 to 30, more preferably in a range of 0 to 20, and particularly preferably in a range of 0 to 10 and examples thereof include amino, methylamino, dimethylamino, diethylamino, dibenzylamino, diphenylamino, and ditolylamino), an alkoxy group (the number of carbon atoms of the alkoxy group is preferably in a range of 1 to 30, more preferably in a range of 1 to 20, and particularly preferably in a range of 1 to 10, and examples thereof include methoxy, ethoxy, butoxy, and 2-ethylhexyloxy), an aryloxy group (the number of carbon atoms of the aryloxy group is preferably in a range of 6 to 30, more preferably in a range of 6 to 20, and particularly preferably in a range of 6 to 12, and examples thereof include phenyloxy, 1-naphthyloxy, and 2-naphthyloxy), a heterocyclic oxy group (the number of carbon atoms of the heterocyclic oxy group is preferably in a range of 2 to 30, more preferably in a range of 2 to 20, and particularly preferably in a range of 2 to 12, and examples thereof include pyridyloxy, pyrazyloxy, pyrimidyloxy, and quinolyloxy),
an acyl group (the number of carbon atoms of the acyl group is preferably in a range of 1 to 30, more preferably in a range of 1 to 20, and particularly preferably in a range of 1 to 12, and examples thereof include acetyl, benzoyl, formyl, and pivaloyl), an alkoxycarbonyl group (the number of carbon atoms of the alkoxycarbonyl group is preferably in a range of 2 to 30, more preferably in a range of 2 to 20, and particularly preferably in a range of 2 to 12, and examples thereof include methoxycarbonyl and ethoxycarbonyl), an aryloxycarbonyl group (the number of carbon atoms of the aryloxycarbonyl group is preferably in a range of 7 to 30, more preferably in a range of 7 to 20, and particularly preferably in a range of 7 to 12, and examples thereof include phenyloxycarbonyl), an acyloxy group (the number of carbon atoms of the acyloxy group is preferably in a range of 2 to 30, more preferably in a range of 2 to 20, and particularly preferably in a range of 2 to 10, and examples thereof include acetoxy and benzoyloxy), an acylamino group (the number of carbon atoms of the acylamino group is preferably in a range of 2 to 30, more preferably in a range of 2 to 20, and particularly preferably in a range of 2 to 10, and examples thereof include acetylamino and benzoylamino),
an alkoxycarbonylamino group (the number of carbon atoms of the alkoxycarbonylamino group is preferably in a range of 2 to 30, more preferably in a range of 2 to 20, and particularly preferably in a range of 2 to 12, and examples thereof include methoxycarbonylamino), an aryloxycarbonylamino group (the number of carbon atoms of the aryloxycarbonylamino group is preferably in a range of 7 to 30, more preferably in a range of 7 to 20, and particularly preferably in a range of 7 to 12, and examples thereof include phenyloxycarbonylamino), an alkyl or arylsulfonylamino group (the number of carbon atoms of the alkyl or arylsulfonylamino group is preferably in a range of 1 to 30, more preferably in a range of 1 to 20, and particularly preferably in a range of 1 to 12, and examples thereof include methanesulfonylamino and benzenesulfonylamino), a sulfamoyl group (such as a sulfamoyl group, or an alkyl or arylsulfamoyl group, the number of carbon atoms of the sulfamoyl group is preferably in a range of 0 to 30, more preferably in a range of 0 to 20, and particularly preferably in a range of 0 to 12, and examples thereof include sulfamoyl, methylsulfamoyl, dimethylsulfamoyl, and phenylsulfamoyl),
a carbamoyl group (such as a carbamoyl group or an alkyl or arylcarbamoyl group, the number of carbon atoms of the carbamoyl group is preferably in a range of 1 to 30, more preferably in a range of 1 to 20, and particularly preferably in a range of 1 to 12, and examples thereof include carbamoyl, methylcarbamoyl, diethylcarbamoyl, and phenylcarbamoyl), an alkylthio group (the number of carbon atoms of the alkylthio group is preferably in a range of 1 to 30, more preferably in a range of 1 to 20, and particularly preferably in a range of 1 to 12, and examples thereof include methylthio and ethylthio), an arylthio group (the number of carbon atoms of the arylthio group is preferably in a range of 6 to 30, more preferably in a range of 6 to 20, and particularly preferably in a range of 6 to 12, and examples thereof include phenylthio), a heterocyclic thio group (the number of carbon atoms of the heterocyclic thio group is preferably in a range of 2 to 30, more preferably in a range of 2 to 20, and particularly preferably in a range of 2 to 12, and examples thereof include pyridylthio, 2-benzimidazolylthio, 2-benzoxazolylthio, and 2-benzothiazolylthio),
an alkyl or arylsulfonyl group (the number of carbon atoms of the alkyl or arylsulfonyl group is preferably in a range of 1 to 30, more preferably in a range of 1 to 20, and particularly preferably in a range of 1 to 12, and examples thereof include mesyl and tosyl), an alkyl or arylsulfinyl group (the number of carbon atoms of the alkyl or arylsulfinyl group is preferably in a range of 1 to 30, more preferably in a range of 1 to 20, and particularly preferably in a range of 1 to 12, and examples thereof include methanesulfinyl and benzenesulfinyl), an ureido group (the number of carbon atoms of the ureido group is preferably in a range of 1 to 30, more preferably in a range of 1 to 20, and particularly preferably in a range of 1 to 12, and examples thereof include ureido, methylureido, and phenylureido), a phosphoric acid amide group (the number of carbon atoms of the phosphoric acid amide group is preferably in a range of 1 to 30, more preferably in a range of 1 to 20, and particularly preferably in a range of 1 to 12, and examples thereof include diethyl phosphoric acid amide and phenyl phosphoric acid amide), a hydroxy group, a mercapto group, a halogen atom (such as a fluorine atom, a chlorine atom, a bromine atom, or an iodine atom, and a fluorine atom is more preferable),
a cyano group, a sulfo group, a carboxyl group, an oxo group, a nitro group, a hydroxamic acid group, a sulfino group, a hydrazine group, an imino group, a heterocyclic group (the number of carbon atoms of the heterocyclic group is preferably in a range of 1 to 30 and more preferably in a range of 1 to 12, examples of a heteroatom constituting the ring include a nitrogen atom, an oxygen atom, and a sulfur atom, and specific examples thereof include imidazolyl, pyridyl, quinolyl, furyl, thienyl, piperidyl, morpholino, benzoxazolyl, benzimidazolyl, benzothiazolyl, a carbazolyl group, and an azepinyl group), a silyl group (the number of carbon atoms of the silyl group is preferably in a range of 3 to 40, more preferably in a range of 3 to 30, and particularly preferably in a range of 3 to 24, and examples thereof include trimethylsilyl and triphenylsilyl), and a silyloxy group (the number of carbon atoms of the silyloxy group is preferably in a range of 3 to 40, more preferably in a range of 3 to 30, and particularly preferably in a range of 3 to 24, and examples thereof include trimethylsilyloxy and triphenylsilyloxy). These substituents may be substituted with any one or more substituents selected from the above-described substituent group α.

Further, in the present invention, when a plurality of substituents are present at one structural site, these substituents may be linked to each other and form a ring or may be fused with a part or entirety of the structural site and form an aromatic ring or an unsaturated heterocycle.

A¹, A², A³, and A⁴ each independently represent a single bond or a divalent linking group. Examples of the divalent linking group include a linear, branched, or cyclic alkylene group (the number of carbon atoms of the alkylene group is preferably in a range of 1 to 30, more preferably in a range of 1 to 12, and still more preferably in a range of 1 to 4, examples thereof include methylene, ethylene, propylene, butylene, pentylene, hexylene, octylene, and decylene, and in a case of a cyclic alkylene group, that is, a cycloalkylene group, the number of carbon atoms thereof is preferably in a range of 3 to 12, more preferably in a range of 3 to 8, and still more preferably in a range of 3 to 6), a linear, branched, or cyclic alkenylene group (the number of carbon atoms of the alkenylene group is preferably in a range of 2 to 30, more preferably in a range of 2 to 12, and still more preferably in a range of 2 to 4, examples thereof include ethenylene and propenylene, and a 5- or 6-membered cyclolalkenylene group is preferable as the cyclic alkenylene group), an alkyleneoxy group (the number of carbon atoms of the alkyleneoxy group is preferably in a range of 1 to 30, more preferably in a range of 1 to 12, and still more preferably in a range of 1 to 4, examples thereof include methyleneoxy, ethyleneoxy, propyleneoxy, butyleneoxy, pentyleneoxy, hexyleneoxy, octyleneoxy, and decyleneoxy), an aralkylene group (the number of carbon atoms of the aralkylene group is preferably in a range of 7 to 30 and more preferably in a range of 7 to 13, and examples thereof include benzylidene and cinnamylidene), an arylene group (the number of carbon atoms of the arylene group is preferably in a range of 6 to 30 and more preferably in a range of 6 to 15, and examples thereof include phenylene, cumenylene, mesitylene, tolylene, and xylylene), an ether group (-O-), a thioether group (-S-), a sulfonyl group (-SO₂-), and a carbonyl group (-C(=O)-). These may include a substituent. As the substituent to be further included, a hydroxy group or a halogen atom is preferable.

M¹ represents a hydrogen ion, an organic base ion, or a metal ion. Examples of the organic base ion include organic base ions selected from ammonium ions (such as an ammonium ion, a methylammonium ion, a dimethylammonium ion, a trimethylammonium ion, a diethylammonium ion, a triethylammonium ion, and a dibenzylammonium ion) and organic heterocyclic ions (a nitrogen-containing heterocyclic ion is preferable, and a heterocycle in the nitrogen-containing heterocyclic ion is preferably a 5- or 6-membered ring, may be an aromatic ring or a simple heterocycle, may be fused with another ring such as a benzene ring or the like, and may form a spiro ring or a cross-linked ring, and examples thereof include a pyridinium ion, a N-methylimidazolium ion, a N-methylmorpholium ion, a 1,8-diazabicyclo[5.4.0]-7-undecanium ion, a 1,8-diazabicyclo[4.3.0]-7-nonenium ion, and a guanidinium ion). Examples of the metal ion include metal ions selected from alkali metal ions (such as a lithium ion, a sodium ion, and a potassium ion) and alkaline earth metal ions (such as a beryllium ion, a magnesium ion, or a calcium ion). Among these, alkali metal ions are preferable. In a case where a plurality of M¹'s are present, the plurality of M¹'s may be the same as or different from each other.

As M1, a hydrogen ion, an organic base ion, or an alkali metal ion is preferable; a hydrogen ion, an organic heterocyclic ion, a lithium ion, a sodium ion, or a potassium ion is more preferable; and a hydrogen ion, a pyridinium ion, a N-alkylmorpholinium ion (preferably a N-methylmorpholinium ion), a N-alkylimidazolium ion (preferably a N-methylimidazolium ion), a lithium ion, or a sodium ion is particularly preferable.

nb1 and nb2 each independently represent an integer of 1 to 4, and mb1 and mb2 each independently represent 0 or 1.

nb1 and nb2 each independently represent preferably 1 to 3, more preferably 1 or 2, and particularly preferably 1. mb1 and mb2 represent preferably 0.

J¹ represents a single bond, -O-, -S-, -SO₂-, -CO-, -CR^{B7}R³⁸-, or an alkenylene group. R^{B7} and R^{B8} each independently represent a hydrogen atom, an alkyl group, or a halogen atom.

Further, -CO- represents -C(=O)- and the same applies to hereinafter.

As J¹, a single bond, -O-, -SO₂-, -CO-, -CR^{B7}R^{B8}-, or an alkenylene group (preferably an ethenylene group or a propenylene group) is preferable; a single bond, -SO₂-, -CR^{B7}R^{B8}-, or an alkenylene group is more preferable; and a single bond is particularly preferable.

R^{B7} and R^{B8} each independently represent preferably an alkyl group or a halogen atom and more preferably a methyl group or a fluorine atom.

p represents an integer of 1 or greater, preferably 1 to 5, more preferably 1 to 3, and particularly preferably 1. q represents an integer of 1 to 4, preferably 1 to 3, more preferably 1 or 2, and particularly preferably 1.

It is preferable that the polymer having a cross-linked structure represented by Formula (NCL-2) is a polymer having a cross-linked structure represented by the following Formula (NCL-2').

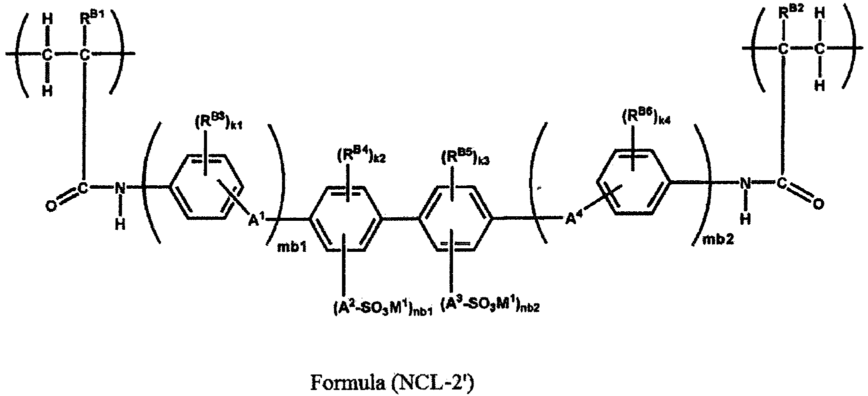

In Formula (NCL-2'), R^{B1}, R^{B2}, R^{B3}, R^{B4}, R^{B5}, R^{B6}, k1, k2, k3, k4, A¹, A², A³, A⁴, M¹, nb1, nb2, mb1, and mb2 respectively have the same definitions as those for R^{B1}, R^{B2}, R^{B3},R ^{B4}, R^{B5}, R^{B6}, k1, k2, k3, k4, A¹, A², A³, A⁴, M¹, nb1, nb2, mb1, and mb2 in Formula (NCL-2) and the preferable ranges thereof are the same as described above.

In the present invention, the polymer having a cross-linked structure represented by Formula (NCL-1) or (NCL-2) may be a copolymer with a monofunctional polymerizable monomer.

Here, in order to adjust water permeability and the electrical resistance of the functional polymer membrane of the present invention, the monofunctional polymerizable monomer plays a role of adjusting the hydrophobicity and cross-linking density of the membrane.

Examples of such a monofunctional polymerizable monomer include optional monomers such as acrylic acid esters, methacrylic acid esters, acrylamides, methacrylamides, vinyl esters, a vinyl ether compound, an aromatic vinyl compound (preferably styrenes), a N-vinyl compound, an allyl compound, acrylic acid, methacrylic acid, acrylonitrile, maleic anhydride, and maleic acid imide. The physical properties such as film forming properties, film hardness, hydrophilicity, hydrophobicity, solubility, reactivity, and stability can be improved by copolymerizing the above-described monomers. A method of synthesizing monomers can be referred to the item of ester synthesis in "The Fifth Series of Experimental Chemistry 16 Synthesis of Organic compounds (II-1)" and the items of handling and purification of monomers in "The Fifth Series of Experimental Chemistry 26 Polymer Chemistry" (edited by The Chemical Society of Japan and published by Maruzen Inc.).

Among these, from the viewpoints of stability and pH resistance of the obtained functional polymer membrane, a monofunctional polymerizable monomer which does not have an ester bond is preferable; a (meth)acrylamide compound, a vinyl ether compound, an aromatic vinyl compound, a N-vinyl compound (polymerizable monomer having an amide bond), or an allyl compound is more preferable; and a (meth)acrylamide compound is particularly preferable.

Examples of the monofunctional polymerizable monomer include compounds described in JP2008-208190A and JP2008-266561A. In order to provide functions for a polymer membrane, it is preferable that these monofunctional polymerizable monomers include an ionic group as described below.

For example, as a (meth)acrylate compound, a compound having a substituent (preferred examples of the substituent include substituents described below) in an alcohol portion of an ester and particularly a compound having an ionic group in an alkyl portion of an alcohol is preferable.

In the present invention, it is preferable that a polymer having a cross-linked structure in the anionic surface layer has a structure represented by the following Formula (NAM).

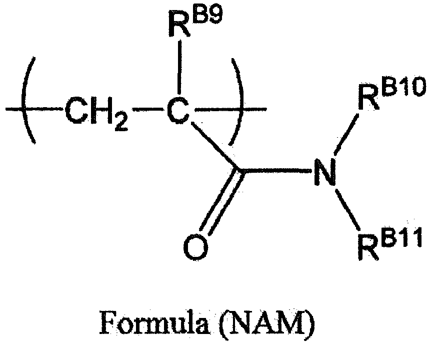

In Formula (NAM), R^{B9} represents a hydrogen atom or a methyl group. R^{B10} represents a hydrogen atom or an alkyl group and R^{B11} represents an alkyl group. Here, R^{B10} and R^{B11} may be bonded to each other to form a ring.

It is preferable that R^{B9} represents a hydrogen atom.

The number of carbon atoms of the alkyl group as k^{B10} and R^{B11} is preferably in a range of 1 to 18, more preferably in a range of 1 to 12, and particularly preferably in a range of 1 to 6. Examples thereof include methyl, ethyl, n-propyl, isopropyl, n-butyl, t-butyl, n-pentyl, n-hexyl, 2-ethylhexyl, n-octyl, t-octyl, n-decyl, and n-octadecyl.

These alkyl groups are preferably linear or branched and may include a substituent.

Examples of the substituent of an alkyl group include a hydroxy group, a sulfo group or a salt thereof, a carboxy group or a salt thereof, an onio group (such as ammonio, pyridinio, or sulfonio), a halogen atom, an alkyl group, an aryl group, a heterocyclic group, an alkoxy group, an aryloxy group, an alkylthio group, an arylthio group, an amino group (such as an amino group, an alkylamino group, an arylamino group, a heterocyclic amino group), an amide group, a sulfonamide group, a carbamoyl group, a sulfamoyl group, an acyl group, and a cyano group.

In the present invention, in order to provide functions for the polymer membrane, it is preferable to provide functions using a substituent of this alkyl group. Accordingly, among these above-described substituents, ionic groups and polar substituents are preferable and ionic groups are particularly preferable.

As the ionic groups, a hydroxy group (particularly, a phenolic or enolic hydroxy group), a sulfo group or a salt thereof, a carboxy group or a salt thereof, and a phosphate group or a salt thereof described above are preferable; and a sulfo group or a salt thereof is more preferable.

Here, as a counter cation in a sulfo group or a carboxy group, a cation of an alkali metal atom or an organic base ion such as N-methyl morpholinium or pyridinium, for example, a lithium cation, a potassium cation, a sodium cation is preferable.

It is preferable that a polymer contained in the anionic surface layer of the present invention is a copolymer having both of the structure represented by Formula (NCL-2) and the structure represented by Formula (NAM). The compositional ratio thereof, as a molar ratio per unit structure, is preferably in a range of 10:90 to 100:0, more preferably in a range of 20:80 to 90:10, and still more preferably in a range of 30:70 to 80:20.

### <Cationic surface layer>

Examples of the cationic group include onio groups (ammonio, pyridinio, and sulfonio). Among these, ammonio is preferable. The cross-linked structure is not particularly limited, but a polymer having a cross-linked structure represented by the following Formula (PCL-1) or (PCL-2) is preferable.

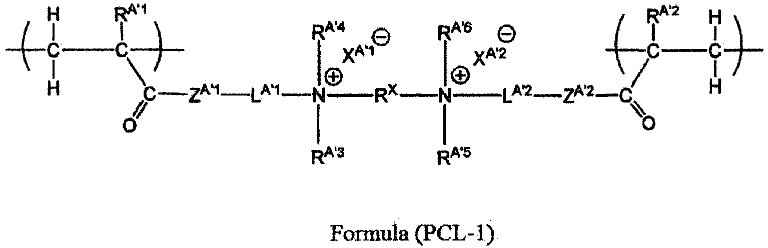

In Formula (PCL-1), R^{A'1} and R^{A'2} each independently represent a hydrogen atom or an alkyl group, and R^{A'3} to R^{A'6} each independently represent an alkyl group or an aryl group. Z^{A'1} and Z^{A'2} each independently represent -O- or -NRb-, here, Rb represents a hydrogen atom or an alkyl group. L^{A'1} and L^{A'2} each independently represent an alkylene group, R^{X} represents an alkylene group, an alkenylene group, an alkynylene group, an arylene group, -O-, or a divalent linking group formed by combining these. X^{A'1} and X^{A'2} each independently represent a halogen ion or an aliphatic or aromatic carboxylic acid ion.

The alkyl group as R^{A'1} and R^{A'2} and Rb is a linear or branched alkyl group and the number of carbon atoms thereof is preferably in a range of 1 to 12, more preferably in a range of 1 to 8, still more preferably in a range of 1 to 4, and particularly preferably 1.

As R^{A'1} and R^{A'2}, a hydrogen atom or a methyl group is preferable and a hydrogen atom is most preferable.

Between a hydrogen atom and an alkyl group, a hydrogen atom is preferable as Rb.

The alkyl group as R^{A'1} and R^{A'2} may include a substituent, and examples of the substituent include an alkyl group, an alkenyl group, an alkynyl group, a cycloalkyl group, an aryl group, a heterocyclic group, a halogen atom, a hydroxy group, an alkoxy group, an aryloxy group, an alkylthio group, an arylthio group, an amino group (such as an amino group, an alkylamino group, an arylamino group, or a heterocyclic amino group), an acylamino group, an alkyl- or arylsulfonamide group, an alkyl- or an arylcarbamoyl group, an alkyl- or arylsulfamoyl group, an alkyl- or arylsulfonyl group, an acyl group, an alkoxycarbonyl group, an aryloxycarbonyl group, a cyano group, a nitro group, an onio group (such as an ammonio group, a pyridinio group, or a sulfonio group), a carboxy group, and a sulfo group.

The alkyl group as R^{A'3} to R^{A'6} is a linear or branched alkyl group and the number of carbon atoms thereof is preferably in a range of 1 to 9, more preferably in a range of 1 to 8, still more preferably in a range of 1 to 4, and particularly preferably 1.

The number of carbon atoms of the aryl group as R^{A'3} to R^{A'6} is preferably in a range of 6 to 12, more preferably in a range of 6 to 9, and particularly preferably 6.

As R^{A'3} to R^{A'6}, an alkyl group is preferable.

The alkyl group or the aryl group as R^{A'3} to R^{A'6} may include a substituent, and examples of the substituent include substituents which may be included in the alkyl group as R^{A'1} and R^{A'2}.

Z^{A1} and Z^{A'2} represent -O- or -NRb-, but -NRb- is preferable.

The alkylene group as L^{A'1} and L^{A'2} is a linear or branched alkylene group and the number of carbon atoms thereof is preferably in a range of 1 to 9, more preferably in a range of 2 to 8, still more preferably in a range of 2 to 6, and particularly preferably 2 or 3. The alkylene group as L^{A'1} and L^{A'2} may include a substituent, and examples of the substituent include substituents which may be included in the alkyl group as R^{A'1} and R^{A'2}.

R^{X} represents an alkylene group, an alkenylene group, an alkynylene group, an arylene group, -O-, or a divalent linking group formed by combining these.

The alkylene group is a linear or branched alkylene group and the number of carbon atoms thereof is preferably in a range of 1 to 9. The alkenylene group or the alkynylene group is a linear or branched alkenylene group or alkynylene group and the number of carbon atoms thereof is preferably in a range of 2 to 9.

The number of carbon atoms of the arylene group is preferably in a range of 6 to 12, more preferably in a range of 6 to 8, and particularly preferably 6.

The number of combined groups of the divalent linking group formed by combining an alkylene group, an alkenylene group, an alkynylene group, an arylene group, or -O- is preferably 2 to 4. For example, examples of the combination of two groups include a combination of an alkylene group and -O-, a combination of an alkylene group and an arylene group, and a combination of an arylene group and an arylene group.

Each group as R^{X} may include a substituent and examples of the substituent include substituents which may be included in the alkyl group as R^{A'1} and R^{A'2}.

As a group formed by combining these, -alkylene-phenylene-alkylene- is preferable.

Examples of the halogen ion as X^{A'1} and X^{A'2} include a chlorine ion, a bromine ion, and an iodine ion.

Examples of the aliphatic or aromatic carboxylic acid ion as X^{A'1} and X^{A'2} include a formate ion, an acetate ion, a propionate ion, a butanoate ion, and a benzoate ion.

Among these, as the aliphatic or aromatic carboxylic acid ion as X^{A'1} and X^{A'2}, aliphatic carboxylic acid ion is preferable and acetic acid ion is particularly preferable.

It is preferable that X^{A'1} and X^{A'2} represent a chlorine ion or a bromine ion.

In the present invention, in a case where the polymer having a cross-linked structure in the cationic surface layer is a polymer having a cross-linked structure represented by Formula (PCL-1), it is preferable that this polymer further has a structure represented by the following Formula (PAM).

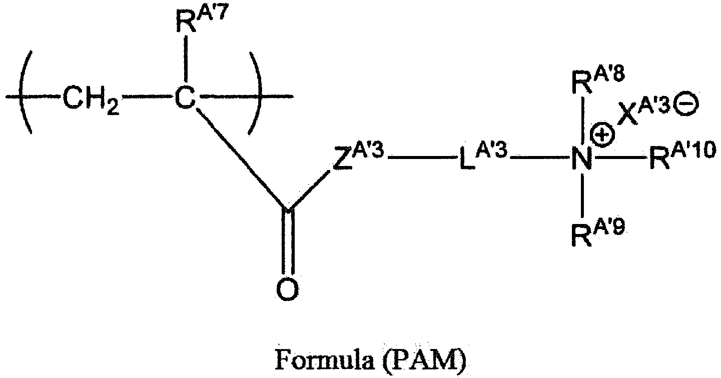

In Formula (PAM), R^{A'7} represents a hydrogen atom or an alkyl group and R^{A'8} to R^{A'10} each independently an alkyl group or an aryl group. Z^{A'3} represents -NRc-. Here, Rc represents a hydrogen atom or an alkyl group. L^{A'3} represent an alkylene group and X^{A'3-}represents a halogen ion or an aliphatic or aromatic carboxylic acid ion.

The alkyl group as R^{A'7} and Rc is a linear or branched alkyl group and the number of carbon atoms thereof is preferably in a range of 1 to 12, more preferably in a range of 1 to 8, still more preferably in a range of 1 to 4, and particularly preferably 1.

Among these, a hydrogen atom or methyl is preferable and a hydrogen atom is most preferable as R^{A'7}.

Between a hydrogen atom and an alkyl group, a hydrogen atom is preferable as Rc.

The alkyl group as R^{A'7} and Rc may include a substituent.

The alkyl group as R^{A'8} to R^{A'10} is a linear or branched alkyl group and the number of carbon atoms thereof is preferably in a range of 1 to 9, more preferably in a range of 1 to 8, still more preferably in a range of 1 to 4, and particularly preferably 1.

The number of carbon atoms of the aryl group as R^{A'8} to R^{A'10} is preferably in a range of 6 to 12, more preferably in a range of 6 to 9, and particularly preferably 6.

As R^{A'8} to R^{A'10}, an alkyl group is preferable.

The alkyl group or the aryl group as R^{A'8} to R^{A'10} may include a substituent.

The alkylene group as L^{A'3} is a linear or branched alkylene group and the number of carbon atoms thereof is preferably in a range of 1 to 9, more preferably in a range of 2 to 8, still more preferably in a range of 2 to 6, and particularly preferably 2 or 3. The alkylene group may include a substituent.

Examples of the halogen ion as X^{A'3} include a chlorine ion, a bromine ion, and an iodine ion. Among these, a chlorine ion is preferable.

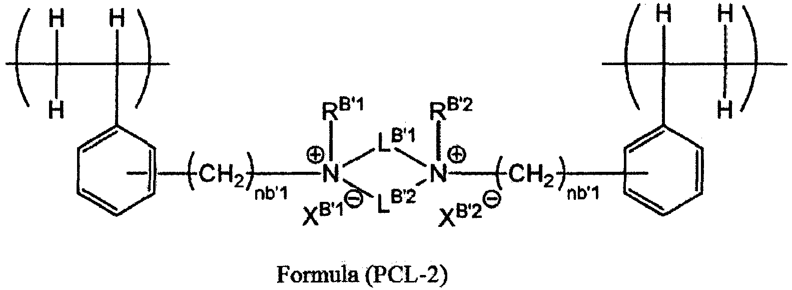

In Formula (PCL-2), L^{B'1} and L^{B'2} each independently represent an alkylene group or an alkenylene group. R^{B'1} and R^{B'2} each independently represent an alkyl group or an aryl group and R^{B'1} and R^{B'2} may be bonded to each other to form a ring. nb'1 represents an integer of 1 to 3. X^{B'1-} and X^{B'2-} each independently represent an organic or inorganic anion.

The number of carbon atoms of the alkylene group as L^{B'1} and L^{B'2} is preferably 2 or 3 and examples thereof include ethylene and propylene. The alkylene group may include a substituent and examples of the substituent include an alkyl group.

The number of carbon atoms of the alkenylene group as L^{B'1} and L^{B'2} is preferably 2 or 3 and more preferably 2. Among these, an ethenylene group is preferable.

As the ring formed by L^{B'1} and L^{B'2}, a piperazine ring is preferable.

The number of carbon atoms of the alkyl group as R^{B'1} and R^{B'2} is preferably in a range of 1 to 8, more preferably in a range of 1 to 4, and still more preferably 1 or 2. Examples of the alkyl group include methyl, ethyl, isopropyl, n-butyl, and 2-ethylhexyl. The alkyl group may include a substituent, and examples of the substituent include a halogen atom, an alkyl group, an aryl group, an alkoxy group, and a hydroxy group.

The number of carbon atoms of the aryl group as R^{B'1} and R^{B'2} is preferably in a range of 6 to 12, more preferably in a range of 6 to 10, and still more preferably 6 to 8. The aryl group may include a substituent, and examples of the substituent include a halogen atom, an alkyl group, an aryl group, an alkoxy group, and a hydroxy group. A phenyl group is preferable as the aryl group.

Among the examples, as R^{B'1} and R^{B'2}, an alkyl group is preferable and a methyl group is particularly preferable.

R^{B'1} and R^{B'2} may be bonded to each other to form a ring. As the ring, a dihydro pyrazine ring or a triethylene diamine ring (1,4-diazabicyclo[2.2.2]octane ring) is preferable and a triethylene diamine ring (1,4-diazabicyclo[2.2.2]octane ring) is particularly preferable.

nb'1 represents preferably 1 or 2 and particularly preferably 1.

X^{B'1-} and X^{B'2-} represent an organic or inorganic anion, but an inorganic anion is preferable.

Examples of the organic anion include an alkylsulfonic acid anion, an arylsulfonic acid anion, an alkyl- or arylcarboxylic acid anion. Specific examples thereof include a methanesulfonic acid anion, a benzenesulfonic acid anion, a toluenesulfonic acid anion, and an acetic acid anion.

Examples of the inorganic anion include a halogen anion, a sulfuric acid dianion, and a phosphoric acid anion. Among these, a halogen anion is preferable. Among the examples of the halogen anion, a chlorine anion or a bromine anion is preferable and a chlorine atom is particularly preferable.

In the present invention, in a case where the polymer having a cross-linked structure in the cationic surface layer is a polymer having a cross-linked structure represented by Formula (PCL-2), it is preferable that this polymer further has a structure represented by the following Formula (PSM).

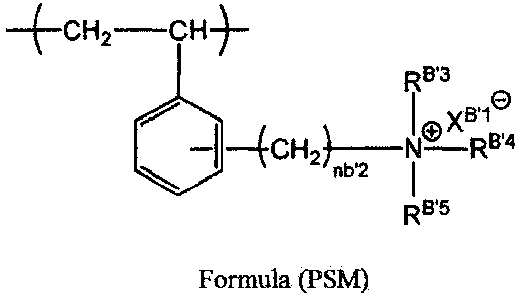

In Formula (PSM), R^{B'3} to R^{B'5} each independently represent an alkyl group or an aryl group. The alkyl group may be linear or branched. R^{B'3} to R^{B'4}, or R^{B'3}, R^{B'4}, and R^{B'5} may be bonded to each other to form an aliphatic heterocycle. nb'2 represents an integer of 1 to 3. X^{B'1-} represents an organic or inorganic anion.

The number of carbon atoms of the alkyl group as R^{B'3} to R^{B'5} is preferably in a range of 1 to 8, more preferably in a range of 1 to 4, and still more preferably 1 or 2. Examples of the alkyl group include methyl, ethyl, isopropyl, n-butyl, and 2-ethylhexyl. The alkyl group may include a substituent, and examples of the substituent include a halogen atom, an alkyl group, an aryl group, an alkoxy group, and a hydroxy group.

The number of carbon atoms of the aryl group as R^{B'3} to R^{B'5} is preferably in a range of 6 to 12, more preferably in a range of 6 to 10, and still more preferably 6 to 8. The aryl group may include a substituent, and examples of the substituent include a halogen atom, an alkyl group, an aryl group, an alkoxy group, and a hydroxy group. A phenyl group is preferable as the aryl group.

Among the examples, as R^{B'3} to R^{B'5}, an alkyl group is preferable.

R^{B'3} and R^{B'4} may be bonded to each other to form a 5- or 6-membered ring, and examples thereof include a pyrrolidine ring, a piperidine ring, a morpholine ring, a thiomorpholine ring, and a piperazine ring.

Examples of the ring formed by R^{B'3}, R^{B'4}, and R^{B'5} being bonded to each other include a quinuclidine ring, and a triethylene diamine ring (1,4-diazabicyclo[2.2.2]octane ring).

nb'2 represents preferably 1 or 2 and particularly preferably 1.

X^{B'1-} represents an organic or inorganic anion, but an inorganic anion is preferable.

Examples of the organic anion include an alkylsulfonic acid anion, an arylsulfonic acid anion, an alkyl- or arylcarboxylic acid anion. Specific examples thereof include a methanesulfonic acid anion, a benzenesulfonic acid anion, a toluenesulfonic acid anion, and an acetic acid anion.

Examples of the inorganic anion include a halogen anion, a sulfuric acid dianion, and a phosphoric acid anion. Among these, a halogen anion is preferable. Among the examples of the halogen anion, a chlorine anion or a bromine anion is preferable and a chlorine atom is particularly preferable.

### <Composition for forming anionic surface layer>

An anionic surface layer contains, as an indispensible component, a polyfunctional polymerizable monomer (preferably a bifunctional polymerizable monomer) having an anionic group and is formed by causing a polymerization curing reaction in a composition (hereinafter, also simply referred to as a "composition for forming an anionic surface layer") containing a monofunctional polymerizable monomer, a polymerization initiator, a polymerization inhibitor, a solvent, and an alkali metal compound as necessary.

Hereinafter, each component will be described in detail.

### [Polyfunctional polymerizable monomer having anionic group]

Examples of the anionic group include a sulfo group or a salt thereof and a carboxy group or a salt thereof. Among these, a sulfo group or a salt thereof is preferable.

In the present invention, a polymerizable compound represented by the following Formula (NCL-I) or (NCL-II) is preferable as the polyfunctional polymerizable monomer.

The polymerizable compound (difunctional polymerizable monomer) represented by Formula (NCL-I) will be described.

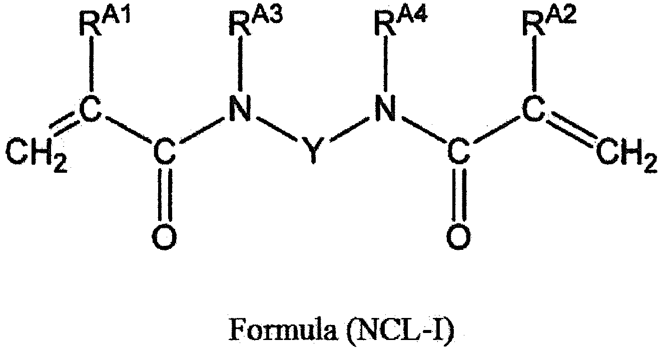

In Formula (NCL-I), R^{A1}, R^{A2}, R^{A3}, R^{A4}, and Y respectively have the same definitions as those for R^{A1}, R^{A2}, R^{A3}, R^{A4}, and Y in Formula (NCL-1) and the preferable ranges thereof are the same as described above.

Next, specific preferred examples of the polymerizable compound represented by Formula (NCL-I) in the present invention will be described below, but the present invention is not limited thereto.

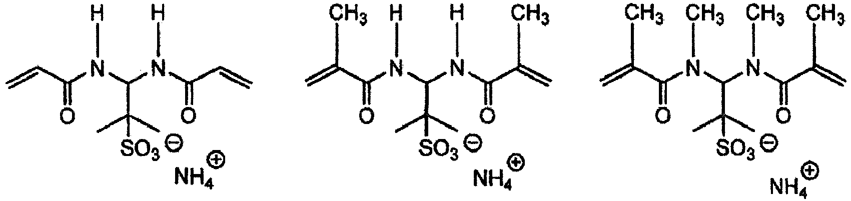

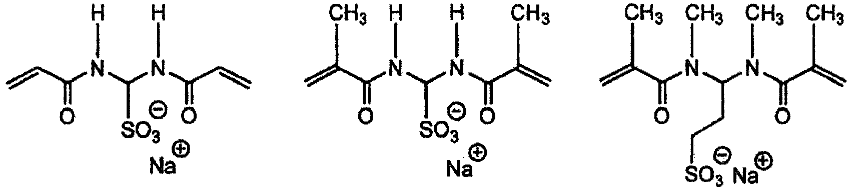

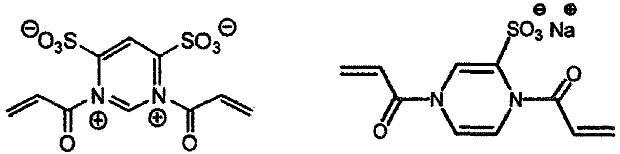

Next, a polymerizable compound (polyfunctional polymerizable monomer) represented by Formula (NCL-II) will be described.

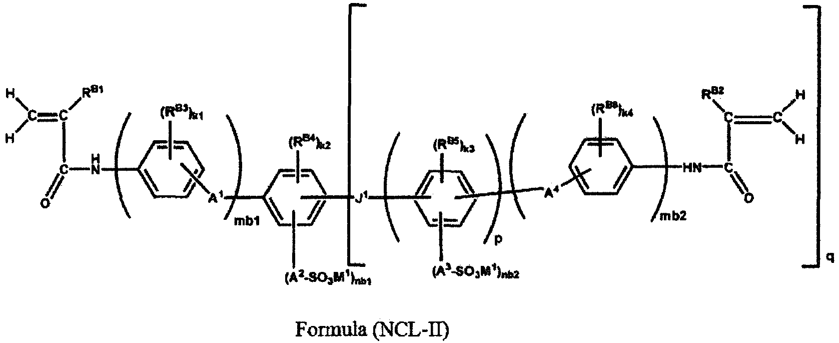

In Formula (NCL-II), R^{B1}, R^{B2}, R^{B3}, R^{B4}, R^{B5}, R^{B6}, k1, k2, k3, k4, p, q, J¹, A¹, A², A³, A⁴, M¹, nb1, nb2, mb1, and mb2 respectively have the same definitions as those for R^{B1}, R^{B2}, R^{B3}, R^{B4}, R^{B5}, R^{B6}, k1, k2, k3, k4, p, q, J¹, A¹, A², A³, A⁴, M¹, nb1, nb2, mb1, and mb2 in Formula (NCL-2) and the preferable ranges thereof are the same as described above.

As the polymerizable compound represented by Formula (NCL-II), a polymerizable compound (bifunctional polymerizable monomer) represented by the following Formula (NCL-II') is preferable.

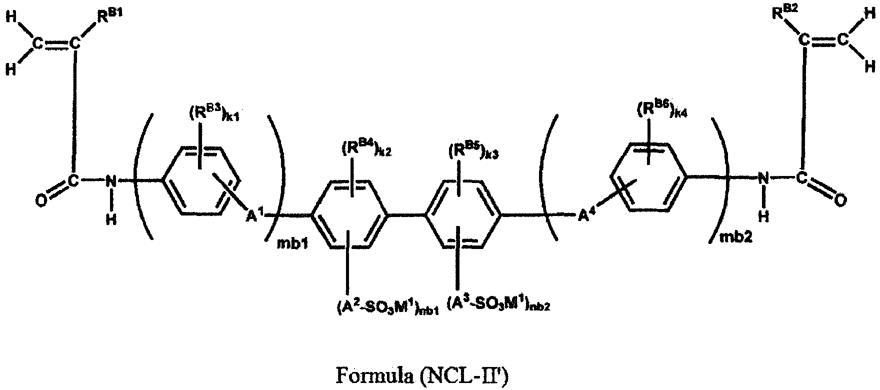

In Formula (NCL-II'), R^{B1}, R^{B2}, R^{B3}, R^{B4}, R^{B5}, R^{B6}, k1, k2, k3, k4, A¹, A², A³, A⁴, M¹, nb1, nb2, mb1, and mb2 respectively have the same definitions as those for R^{B1}, R^{B2}, R^{B3}, R^{B4}, R^{B5}, R^{B6}, k1, k2, k3, k4, A¹, A², A³, A⁴, M¹, nb1, nb2, mb1, and mb2 in Formula (NCL-2) and the preferable ranges thereof are the same as described above.

Next, specific preferred examples of the polymerizable compound represented by Formula (NCL-11) in the present invention will be described below, but the present invention is not limited thereto.

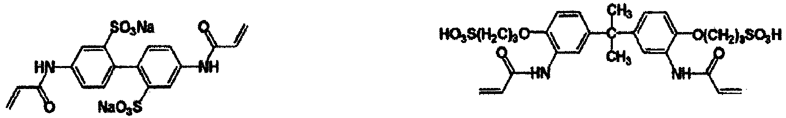

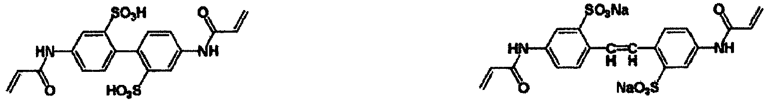

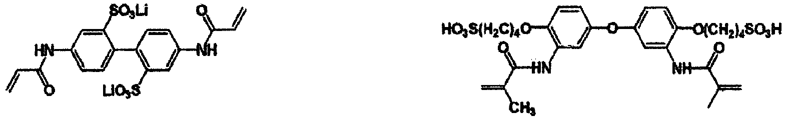

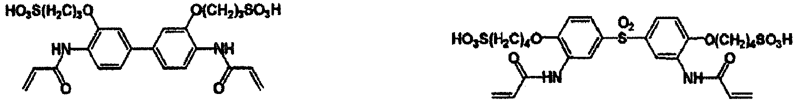

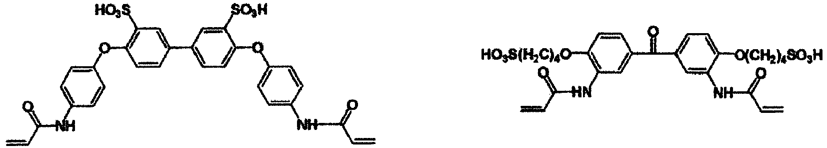

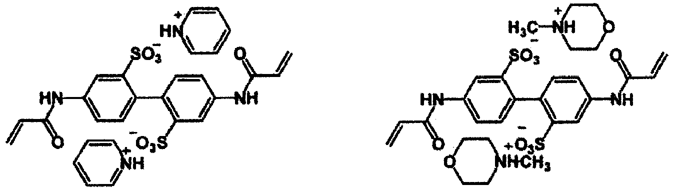

The content of the polymerizable compound represented by Formula (NCL-II) is preferably in a range of 1% to 95% by mass, more preferably in a range of 10% to 60% by mass, and still more preferably in a range of 15% by mass to 50% by mass with respect to the total mass of the solid content of the composition for forming an anionic surface layer.

When the content thereof is in the above-described preferable range, desired curing properties can be obtained and the pH resistance, mechanical strength, and flexibility are excellent.

### [Monofunctional polymerizable monomer]

It is preferable that the composition for forming an anionic surface layer contains a monofunctional polymerizable monomer and a polymerizable compound represented by the following Formula (NAM-1) is preferable as such a monofunctional polymerizable monomer.

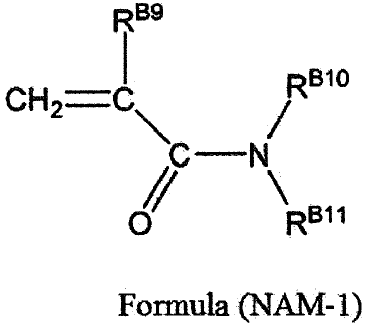

In Formula (NAM-1), R^{B9}, R^{B10}, and R^{B11} respectively have the same definitions as those for R^{B9}, R^{B10}, and R^{B11} in Formula (NAM) and the preferable ranges thereof are the same as described above.

Next, specific preferred examples of the polymerizable compound represented by Formula (NAM-1) in the present invention will be described below, but the present invention is not limited thereto.

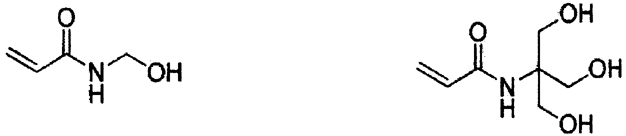

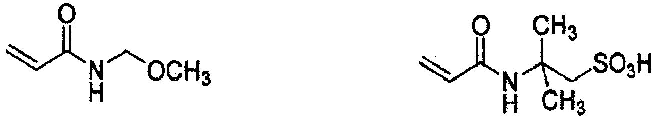

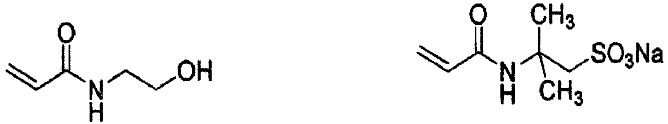

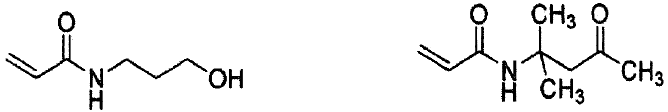

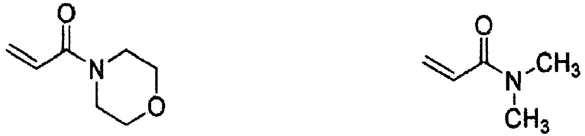

These monofunctional polymerizable monomers are commercially available from Kohjin Co., Ltd., Kyowa Chemical Co., Ltd., Fluka Inc., Sigma-Aldrich Co., LLC., and Toagosei Co., Ltd. and can be easily synthesized using known methods.

### <Polymerization initiator>

It is preferable that the composition for forming an anionic surface layer of the present invention is polymerized and cured in the coexistence of a polymerization initiator. Accordingly, it is preferable that the composition for forming an anionic surface layer contains a polymerization initiator.

In the present invention, among polymerization initiators, photopolymerization initiators which are capable of initiating polymerization through irradiation with active radiation.

Examples of the photopolymerization initiators include aromatic ketones, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a compound having a carbon halogen bond, and an alkylamine compound.

The polymerization initiator is not limited to a photopolymerization initiator as long as the polymerization initiator is dissolved in each of the above-described components or a solvent used at the time of a reaction. Examples of such a polymerization initiator include an oil-soluble peroxide-based thermal polymerization initiator such as benzoyl peroxide (BPO); an oil-soluble azo-based thermal polymerization initiator such as azobisisobutyronitrile (AIBN); and a water-soluble azo-based thermal polymerization initiator such as an azobiscyanovaleric acid (ACVA). Further, the proportion of water in a solvent of solution polymerization is large, a water-soluble peroxide-based thermal polymerization initiator such as ammonium persulfate or potassium persulfate; or hydrogen peroxide water can be used. Further, a combination of redox agents such as ferrocene or amines can be used.

Preferred examples of the aromatic ketones, the acylphosphine oxide compound, and the thio compound include compounds having a benzophenone skeleton or a thioxanthone skeleton described in "RADIATION CURING IN POLYMER SCIENCE AND TECHNOLOGY", pp. 77 to 117 (1993). More preferred examples thereof include an α-thiobenzophenone compound described in JP1972-6416B (JP-S47-6416B), a benzoin ether compound described in JP1972-3981B (JP-S47-3981B), an α-substituted benzoin compound described in JP1972-22326B (JP-S47-22326B), a benzoin derivative described in JP1972-23664B (JP-S47-23664B), aroylphosphonic acid ester described in JP1982-30704A (JP-S57-30704A), dialkoxybenzophenone described in JP1985-26483B (JP-S60-26483B), benzoin ethers described in JP1985-26403B (JP-S60-26403B) and JP1987-81345A (JP-S62-81345A), α-aminobenzophenones described in JP1989-34242B (JP-H01-34242B), the specification of US4318791A, and the specification of EP0284561A1, p-di(dimethylaminobenzoyl)benzene described in JP1990-211452A (JP-H02-211452A), thio-substituted aromatic ketone described in JP1986-194062A (JP-S61-194062A), acylphosphine sulfide described in JP1990-9597B (JP-H02-9597B), acyl phosphine described in JP1990-9596B (JP-H02-9596B), thioxanthones described in JP1988-61950B (JP-S63-61950B), and coumarins described in JP1984-42864B (JP-S59-42864B). Moreover, polymerization initiators described in JP2008-105379A and JP2009-114290A are also preferable. Further, polymerization initiators described in pp. 65 to 148 of "Ultraviolet Curing System" (published by United Engineering Center in 1989) written by Kiyoshi Kato may be exemplified.

In the present invention, a water-soluble polymerization initiator is preferable.

Here, when a polymerization initiator is water-soluble, 0.1% by mass or greater of the polymerization initiator is dissolved in distilled water at 25°C. It is preferable that 1 % by mass or greater of the water-soluble polymerization initiator is dissolved in distilled water at 25°C and particularly preferable that 3% by mass or greater of the water-soluble polymerization initiator is dissolved in distilled water at 25°C.

In the present invention, the content of the polymerization initiator is preferably in a range of 0.1 to 10 parts by mass, more preferably in a range of 0.1 to 5 parts by mass, and still more preferably in a range of 0.3 to 2 parts by mass with respect to 100 parts by mass of the total solid content in the composition for forming an anionic surface layer.

<Polymerization inhibitor>

It is preferable that the composition for forming an anionic surface layer of the present invention includes a polymerization inhibitor.

As the polymerization inhibitor, optional polymerization inhibitors can be used and examples thereof include a phenol compound, a hydroquinone compound, an amine compound, and a mercapto compound.

Specific examples of the phenol compound include hindered phenol (indicating phenol having a t-butyl group at an ortho position and 2,6-di-t-butyl-4-methylphenol is typically exemplified) and bisphenol. Specific examples of the hydroquinone compound include monomethyl ether hydroquinone. Further, specific examples of the amine compound include N-nitroso-N-phenylhydroxylamine and N,N-diethylhydroxylamine.

Moreover, these polymerization inhibitors may be used alone or in combination of two or more kinds thereof.

The content of the polymerization inhibitor is preferably in a range of 0.01 to 5 parts by mass, more preferably in a range of 0.01 to 1 part by mass, and still more preferably in a range of 0.01 to 0.5 parts by mass with respect to 100 parts by mass of the total solid content in the composition for forming an anionic surface layer.

### <Solvent>

The composition for forming an anionic surface layer of the present invention may contain a solvent. The content of the solvent in the composition for forming an anionic surface layer is preferably in a range of 5% to 40% by mass, more preferably in a range of 10% to 40% by mass, and still more preferably in a range of 20% to 40% by mass with respect to the total content of the composition for forming an anionic surface layer.

When the composition contains a solvent, a curing (polymerization) reaction uniformly and smoothly proceeds. Further, in a case where a porous support is impregnated with the composition for forming an anionic surface layer, this impregnation smoothly proceeds.

As the solvent, water or a mixed solution of water and a solvent having a solubility of 5% by mass or greater in water is preferably used and solvents which can be freely mixed into water are more preferable. Accordingly, solvents selected from water and water-soluble solvents are preferable.

Particularly preferred examples of the water-soluble solvents include an alcohol-based solvent, an ether-based solvent which is an aprotic polar solvent, an amide-based solvent, a ketone-based solvent, a sulfoxide-based solvent, a sulfone-based solvent, a nitrile-based solvent, and an organic phosphorous-based solvent.

Examples of the alcohol-based solvent include methanol, ethanol, isopropanol, n-butanol, ethylene glycol, propylene glycol, diethylene glycol, and dipropylene glycol. These may be used alone or in combination of two or more kinds thereof.

Further, preferred examples of the aprotic polar solvent include dimethyl sulfoxide, dimethylimidazolidinone, sulfolane, N-methylpyrrolidone, dimethylformamide, acetonitrile, acetone, dioxane, tetramethylurea, hexamethylphosphoramide, hexamethylphosphorotriamide, pyridine, propionitrile, butanone, cyclohexane, tetrahydrofuran, tetrahydropyran, ethylene glycol diacetate, and γ-butyrolactone. Among these, dimethyl sulfoxide, N-methylpyrrolidone, dimethylformamide, dimethylimidazolidinone, sulfolane, acetone or acetonitrile, and tetrahydrofuran are more preferable. These may be used alone or in combination of two or more kinds thereof.

### [Alkali metal compound]

The composition for forming an anionic surface layer of the present invention may include an alkali metal compound in order to improve the solubility of the polymerizable compound which has a (meth)acrylamide structure and is represented by Formula (NCL-1) or (NCL-II). Preferred examples of the alkali metal compound include hydroxide salts, chloride salts, and nitrate of lithium, sodium, and potassium. Among these, a lithium compound is more preferable and specific examples thereof include lithium hydroxide, lithium chloride, lithium bromide, lithium nitrate, lithium iodide, lithium chlorate, lithium thiocyanate, lithium perchlorate, lithium tetrafluoroborate, lithium hexafluorophosphate, and lithium hexafluoroarsenate.

Here, it is also preferable that the alkali metal compound is used to neutralize the composition for forming an anionic surface layer and a composition solution mixture for forming an anionic surface layer.

These alkali metal compounds may be hydrates and may be used alone or in combination of two or more kinds thereof.

The amount of the alkali metal compound to be added to the composition for forming an anionic surface layer is preferably in a range of 0.1 to 20 parts by mass, more preferably in a range of 1 to 20 parts by mass, and still more preferably in a range of 5 to 20 parts by mass with respect to 100 parts by mass of the total solid content in the composition for forming an anionic surface layer.

### <Composition for forming cationic surface layer>

A composition for forming a cationic surface layer contains, as an indispensible component, a polyfunctional polymerizable monomer (preferably a bifunctional polymerizable monomer) having a cationic group and is formed by causing a polymerization curing reaction in a composition (hereinafter, also simply referred to as a "composition for forming a cationic surface layer") containing a monofunctional polymerizable monomer, the above-described polymerization initiator, the above-described polymerization inhibitor, the above-described solvent, and the like as necessary.

### [Polyfunctional polymerizable monomer having cationic group]

Examples of the cationic group include an onio group (such as an ammonio group, a pyridinio group, or a sulfonio group). Among these, an ammonio group is preferable.

In the present invention, a polymerizable compound represented by the following Formula (PCL-1) or (PCL-II) is preferable as the polyfunctional polymerizable monomer having a cationic group.

First, the polymerizable compound (difunctional polymerizable monomer) represented by Formula (PCL-1) will be described.

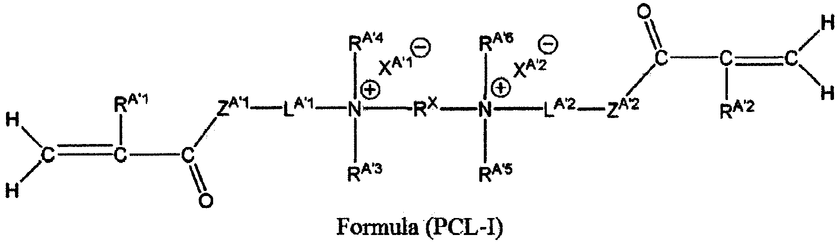

In Formula (PCL-I), R^{A'1} to R^{A'6}, Z^{A'1}, Z^{A'2}, L^{A'1}, L^{A'2}, R^{X}, X^{A'1}, and X^{A'2} have the same definitions as those for R^{A'1} to R^{A'6}, Z^{A'1}, Z^{A'2}, L^{A'1}, L^{A'2}, R^{X}, X^{A'1}, and X^{A'2} in Formula (PCL-1) and the preferable ranges thereof are the same as described above.

Hereinafter, specific examples of the polymerizable compound represented by Formula (PCL-I) will be described, but the present invention is not limited thereto.

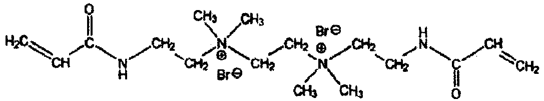

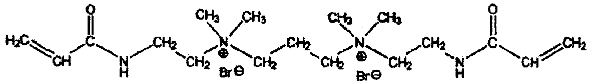

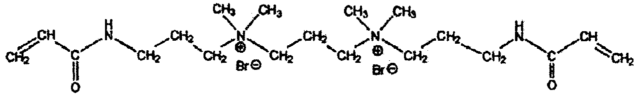

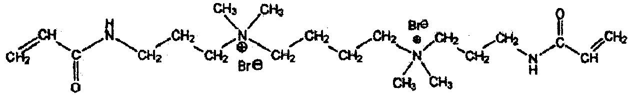

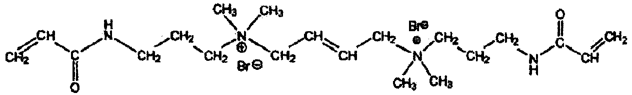

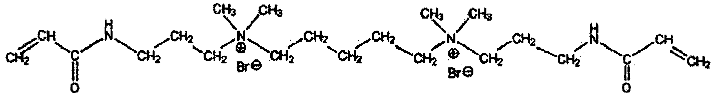

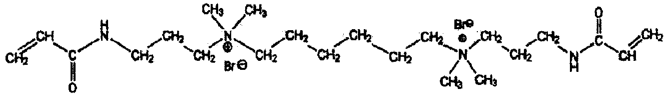

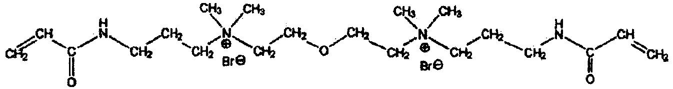

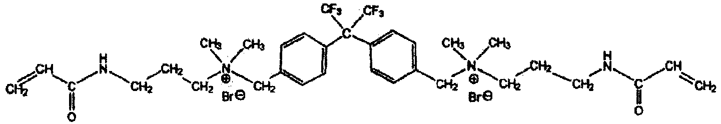

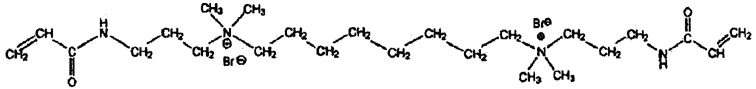

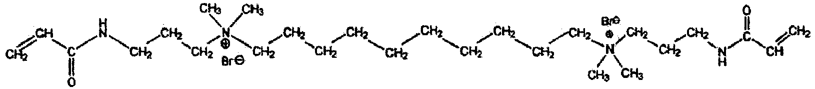

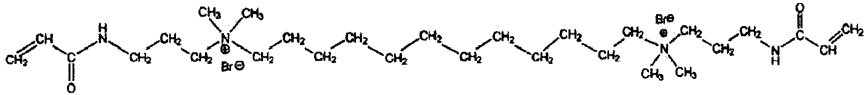

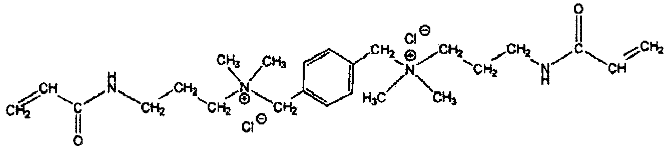

The polymerizable compound represented by Formula (PCL-1) can be produced by reacting a compound represented by the following Formula (A-1) with a compound represented by the following Formula (A-2).

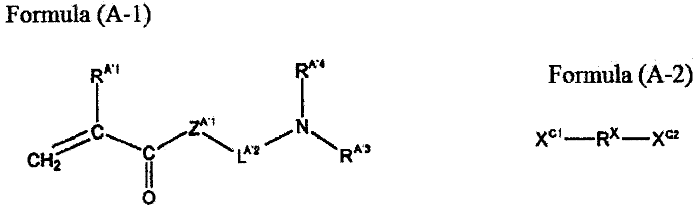

In Formula (A-1), R^{A'1}, R^{A'3}, R^{A'4}, Z^{A'1}, and L^{A'1} have the same definitions as those for R^{A'1}, R^{A'3}, R^{A'4}, Z^{A'1}, and L^{A'1} in Formula (PCL-I) and the preferable ranges thereof are the same as described above.

In Formula (A-2), R^{X} has the same definition as that for R^{X} in Formula (PCL-I) and the preferable range thereof is the same as described above. X^{C1} and X^{C2} each independently represent a halogen atom or an aliphatic or aromatic acyloxy group.

Here, X^{C1} and X^{C2} are released as anions by being reacted with a compound represented by Formula (A-1) and then become X^{A2} and X^{A3} in Formula (PCL-I).

Next, the polymerizable compound (bifunctional polymerizable monomer) represented by Formula (PCL-II) will be described.

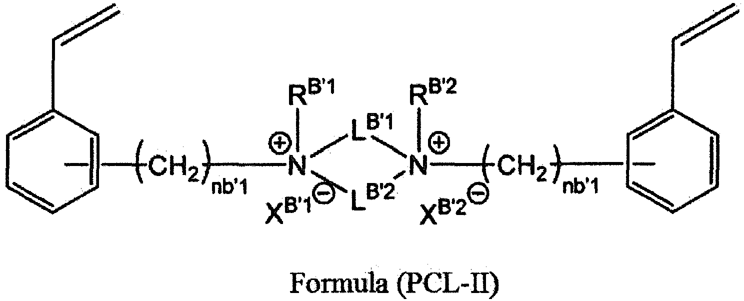

In Formula (PCL-II), L^{B'1}, L^{B'2}, R^{B'1}, R^{B'2}, n^{b'1}, X^{B'1-}, and X^{B'2-} have the same definitions as those for L^{B'1}, L^{B'2}, R^{B'1}, R^{B'2}, n^{b'1}, X^{B'1-}, and X^{B'2-} in Formula (PCL-2) and the preferable ranges thereof are the same as described above.

Hereinafter, specific examples of the polymerizable compound represented by Formula (PCL-II) will be described, but the present invention is not limited thereto.

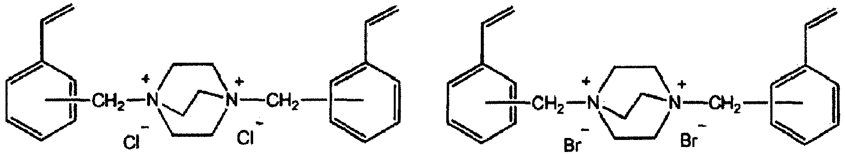

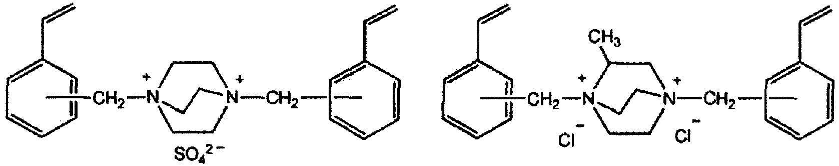

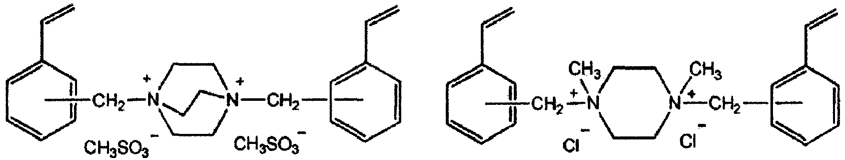

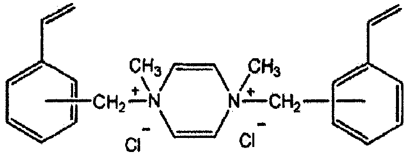

The polymerizable compound represented by Formula (PCL-II) can be synthesized according to a method described in JP2000-229917A or a method in conformity with the method described in JP2000-229917A.

As the cationic surface layer of the present invention, a combination of two or more polymerizable compounds represented by Formula (PCl-II) may be used.

In the present invention, the content of the polymerizable compound represented by Formula (PCL-II) is preferably in a range of 10 to 99 parts by mass, more preferably in a range of 15 to 99 parts by mass, and particularly preferably in a range of 20 to 99 parts by mass with respect to 100 parts by mass of the total solid content in the composition for forming a cationic surface layer.

### [Monofunctional polymerizable monomer]

In the composition for forming a cationic surface layer, in a case where the polymerizable compound represented by Formula (PCL-I) is used as a polyfunctional polymerizable monomer having a cationic group, it is preferable that a combination of polymerizable compounds represented by the following Formula (PAM-1) is used as a monofunctional polymerizable monomer.

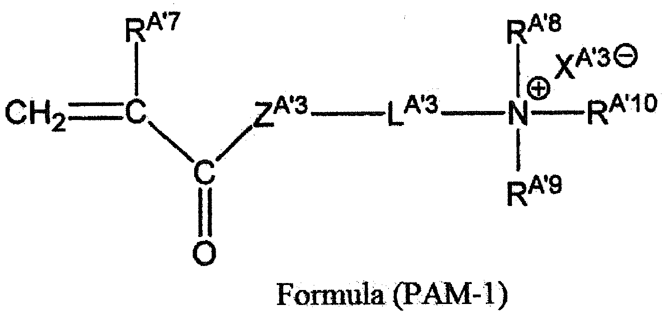

In Formula (PAM-1), R^{A'7} to R^{A'10}, Z^{A'3}, L^{A'3}, and X^{A'3-} have the same definitions as those for R^{A'7} to R^{A'10}, Z^{A'3}, L^{A'3}, and X^{A'3-} in Formula (PAM) and the preferable ranges thereof are the same as described above.

Hereinafter, specific examples of the polymerizable compound represented by Formula (PAM-1) will be described, but the present invention is not limited thereto.

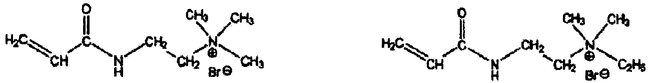

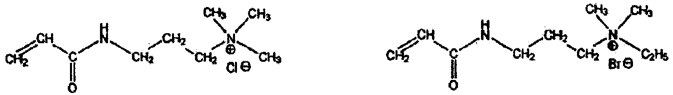

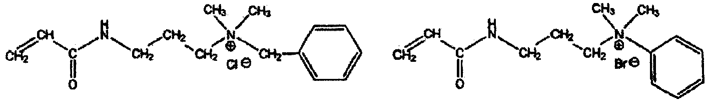

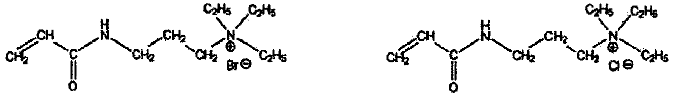

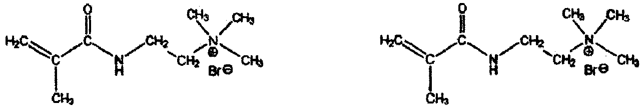

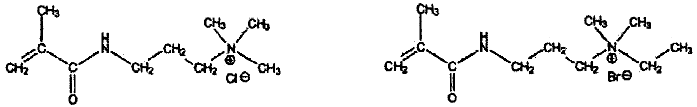

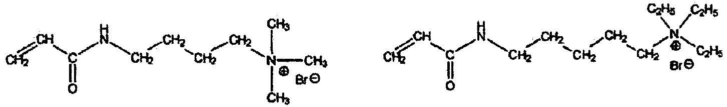

In the composition for forming a cationic surface layer, in a case where the polymerizable compound represented by Formula (PCL-II) is used as a polyfunctional polymerizable monomer having a cationic group, it is preferable that a combination of polymerizable compounds represented by the following Formula (PSM-1) is used as a monofunctional polymerizable monomer.

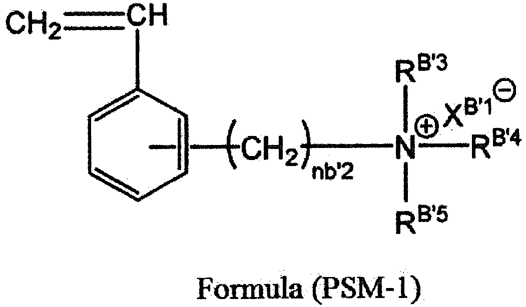

In Formula (PSM-1), R^{B'3} to R^{B'5}, nb'2, and X^{B'1-} have the same definitions as those for R^{B'3} to R^{B'5}, nb'2, and X^{B'1-} in Formula (PSM) and the preferable ranges thereof are the same as described above.

Hereinafter, specific examples of the polymerizable compound represented by Formula (PSM-1) will be described, but the present invention is not limited thereto.

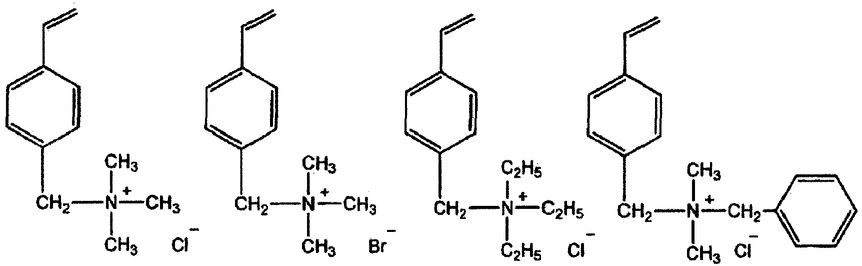

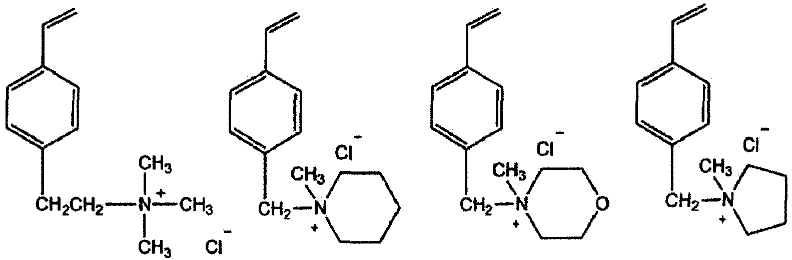

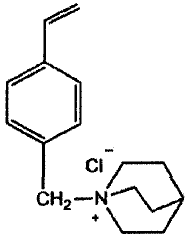

The polymerizable compound represented by Formula (PSM-1) can be synthesized according to a method described in JP2000-229917A or JP2000-212306A or a method in conformity with the method described in JP2000-229917A or JP2000-212306A. Further, commercially available products manufactured by Sigma-Aldrich Co., LLC. can be obtained as the polymerizable compound.

As the cationic surface layer of the present invention, a combination of two or more polymerizable compounds represented by Formula (PSM-1) may be used.

In the present invention, the content of the styrene-based monomer represented by Formula (PSM-1) is preferably in a range of 1 to 80 parts by mass, more preferably in a range of 10 to 70 parts by mass, and particularly preferably in a range of 20 to 60 parts by mass with respect to 100 parts by mass of the total solid content in the composition for forming a cationic surface layer.

### <Ion exchange membrane>

The anion exchange membrane serving as a base when the anionic surface layer of the present invention is formed (hereinafter, also simply referred to as an "anion exchange membrane") is not particularly limited, and commercially available membranes such as SELEMION AHA (manufactured by Asahi Glass Co., Ltd.), NEOSEPTA AMX, and NEOSEPTA AHA (both manufactured by ASTOM Corporation) may be used.

However, in the present invention, it is more preferable to form an anion exchange membrane by causing a polymerization curing reaction in a composition having constituent components which are the same as those of the above-described composition for forming a cationic surface layer. For example, alcohol of an acrylic ester or acrylamide (the acid moiety is an acrylic acid having an alkyl group at the α-position) or a monofunctional monomer having a quaternary ammonium group in an amine moiety is polymerized and cured together with a crosslinkable compound which has two or more ethylenically unsaturated groups and has an acrylic ester or an acrylamide skeleton.

The thickness of the anion exchange membrane, together with a support in a case of using a support, is preferably in a range of 30 to 300 µm, more preferably in a range of 50 to 250 µm, and particularly preferably in a range of 80 to 200 µm.

Further, the cation exchange membrane serving as a base when the cationic surface layer of the present invention is formed (hereinafter, also simply referred to as a "cation exchange membrane") is not particularly limited, and commercially available membranes such as SELEMION CMV (manufactured by Asahi Glass Co., Ltd.), NEOSEPTA CMX, and NEOSEPTA CMB (both manufactured by ASTOM Corporation) may be used. However, in the present invention, it is preferable to form a cation exchange membrane by causing a polymerization curing reaction in a composition having constituent components which are the same as those of the above-described composition for forming an anionic surface layer.

For example, alcohol of an acrylic ester or acrylamide (the acid moiety is an acrylic acid having an alkyl group at the α-position) or a monofunctional monomer having a sulfo group in an amine moiety is polymerized and cured together with a crosslinkable compound which has two or more ethylenically unsaturated groups and has an acrylic ester or an acrylamide skeleton.

The thickness of the cation exchange membrane, together with a support in a case of using a support, is preferably in a range of 30 to 300 µm, more preferably in a range of 50 to 250 µm, and particularly preferably in a range of 80 to 200 µm.

Hereinafter, a composition having constituent components which are the same as those of the composition for forming a cationic surface layer or the composition for forming an anionic surface layer, used to form an ion exchange membrane, is also referred to as a composition for forming an ion exchange membrane.

### <Support>

In regard to the ion exchange membrane serving as a base when a surface layer is formed, various techniques can be used to provide an ion exchange membrane having excellent mechanical strength. For example, a support can be used as a reinforcing material of a membrane and a porous support can be preferably used. A porous support is coated and/or impregnated with the composition for forming an ion exchange membrane and then may constitute a part of the ion exchange membrane through a polymerization curing reaction in the composition.

Examples of the porous support serving as a reinforcing material include synthetic woven fabric, synthetic non-woven fabric, a sponge-like film, and a film having fine through holes. Examples of materials forming the porous support of the present invention include a porous film based on polyolefin (such as polyethylene or polypropylene), polyacrylonitrile, polyvinyl chloride, polyester, polyamide, and copolymers of these; and a porous film based on polysulfone, polyether sulfone, polyphenylene sulfone, polyphenylene sulfide, polyimide, polyethermide, polyamide, polyamide imide, polyacrylonitrile, polycarbonate, polyacrylate, cellulose acetate, polypropylene, poly(4-methyl-1-pentene), polyvinylidene fluoride, polytetrafluoroethylene, polyhexafluoropropylene, polychlorotrifluoroethylene, and copolymers of these. Among these, in the present invention, polyolefin is preferable.

Commercially available products of porous supports and reinforcing materials are manufactured by, for example, Japan Vilene Company, Ltd., Freudenberg Filtration Technologies, and Sefar AG.

In addition, in a case where the polymerization curing reaction is carried out by irradiation with energy rays, the porous support and the reinforcing material are required not to shield a wavelength range of the energy rays, that is, the porous support and the reinforcing material are required to transmit irradiation of a wavelength used for polymerization and curing. However, it is not necessary to consider this point in a case of thermal polymerization curing. Further, it is preferable that the porous reinforcing material can be penetrated by the composition for forming an ion exchange membrane.

The thickness of the porous support of the present invention is preferably in a range of 30 to 300 µm and particularly preferably in a range of 50 to 200 µm.

It is preferable that the porous support has hydrophilicity. For the purpose of providing hydrophilicity for a support, a typical method such as a corona treatment, a plasma treatment, a fluorine gas treatment, an ozone treatment, a sulfuric acid treatment, or a silane coupling agent treatment can be used.

### <Thickness of surface layer and ion exchange membrane>

In the present invention, the thickness of the surface layer and the ion exchange membrane is not particularly limited. However, the thickness of the surface layer is preferably 50% or less, more preferably 20% or less, and particularly preferably 10% or less of the thickness of the ion exchange membrane. The lower limit thereof is not particularly limited, but is typically 1% or greater.

The thickness of the surface layer is preferably in a range of 1 µm to 60 µm, more preferably in a range of 2 µm to 30 µm, and particularly preferably in a range of 3 µm to 10 µm. Meanwhile, the thickness of the ion exchange membrane is preferably in a range of 100 µm to 200 µm, more preferably in a range of 100 µm to 180 µm, and particularly preferably in a range of 100 µm to 160 µm.

In the present invention, when the thickness of the surface layer is in the above-describe range, the electrical resistance of the membrane can be suppressed so that power consumption can be reduced through electrodialysis or the like in a case where the functional polymer membrane of the present invention is used for electrodialysis or the like.

Between a case where a surface layer having an ionic group with the same charge as an ion exchange group of an ion exchange membrane is formed on one surface of the ion exchange membrane and a case where a surface layer having an ionic group with a charge opposite to a charge of an ion exchange group of an ion exchange membrane is formed on one surface of the ion exchange membrane, the electrical resistance of the entire membrane in the latter case becomes larger than that of the former case because the charge is opposite to the charge of the ionic group of the surface layer and the electrical resistance is increased to prevent transmission of divalent or higher valent ions.

Therefore, it is preferable that an increase in electrical resistance of the membrane due to an increase in thickness of the membrane is suppressed by setting the thickness of the surface layer of the present invention to be in the above-described range.

### <Density of surface layer>

The density [×10⁻³ g/cm²] of the surface layer is preferably in a range of 0.01 to 10, more preferably in a range of 0.03 to 3, and particularly preferably in a range of 0.1 to 3.

From the viewpoints that an increase in electrical resistance of the membrane with respect to a NaNO₃ aqueous solution is suppressed and permeability to divalent ions derived from Na₂SO₄ or MgCl₂ can be decreased without decreasing permeability of monovalent ions, it is preferable that the density of the surface layer is in the above-described range.

### <Properties of functional polymer membrane>

### (Electrical resistance)

The electrical resistance (film resistance) of the functional polymer membrane of the present invention with respect to a monovalent ion aqueous solution is preferable less than 7.0 Ω·cm², more preferably less than 5.0 Ω·cm², still more preferably less than 4.0 Ω·cm², and particularly preferably less than 3.0 Ω·cm². Meanwhile, the film resistance of the functional polymer membrane of the present invention with respect to a divalent ion aqueous solution is preferably less than 40 Ω·cm², more preferably less than 30 Ω·cm², still more preferably less than 25 Ω·cm², and particularly preferably less than 20 Ω·cm².

It is preferable that the film resistance is as low as possible. Further, from the viewpoint of exhibiting the effects of the present invention, it is preferable that the film resistance is set to a lowest value within the range which can be realized. The lower limit of the electrical resistance is not particularly limited, but is practically 0.1 Ω·cm² or greater.

### (Ratio of electrical resistance)

The (ER ratio) of the film resistance of the membrane with respect to a divalent ion aqueous solution to the film resistance of the membrane with respect to a monovalent ion aqueous solution is preferably 4.0 or greater, more preferably 4.5 or greater, still more preferably 5.0 or greater, and particularly preferably 6.5 or greater.

It is preferable that the value is as large as possible. In the present invention, when the ratio is large, this means that the selectivity of the functional polymer membrane with respect to monovalent ions is high.

### [Method of producing functional polymer membrane]

Next, a method of producing a functional polymer membrane of the present invention will be described.

According to the method of producing a functional polymer membrane of the present invention, the composition for forming an ion exchange membrane used in the present invention is subjected to a polymerization curing reaction to form an ion exchange membrane. Next, a surface layer is formed on one or both surfaces of this ion exchange membrane. It is preferable that the surface layer is formed on none surface of the ion exchange membrane. Hereinafter, an example of the method of producing a functional polymer membrane of the present invention will be described in detail.

### (Preparation of ion exchange membrane)

The ion exchange membrane used in the present invention can be prepared using a temporary support (peeled off from the membrane after a curing reaction is finished). In this case, in the present invention, since a porous support which becomes a part of the functional polymer membrane is preferably used, it is preferable that the functional polymer membrane is prepared using this porous support without using a temporary support.

Further, the functional polymer membrane can be prepared using a fixed support according to a batched type (batched system) or using a moving support according to a continuous type (continuous system).

Moreover, in a case where a temporary support is used, it is not necessary to consider substance permeation and the temporary support is not particularly limited as long as the support include a metal plate such as an aluminum plate and can be fixed for film formation.

The porous support can be coated or impregnated with the composition for forming an ion exchange membrane using various methods such as curtain coating, extrusion coating, air-knife coating, slide coating, nip roll coating, forward roll coating, reverse roll coating, dip coating, kiss coating, rod bar coating, or spray coating. A plurality of layers can be coated simultaneously or continuously. For simultaneous multilayer coating, curtain coating, slide coating, slot die coating, or extrusion coating is preferable.

When a continuous system is used, it is preferable that the functional polymer membrane is produced by continuously coating a moving support with the composition for forming an ion exchange membrane used in the present invention and causing a polymerization curing reaction and more preferable that the functional polymer membrane is produced using a producing unit that includes means for moving a composition coating unit for forming an ion exchange membrane, an irradiation source for polymerizing and curing the composition for forming an ion exchange membrane, a film winding unit which collects a formed film, and a support from the composition coating unit for forming an ion exchange membrane to the irradiation source and the film winding unit.

In the present production example, the ion exchange membrane used in the present invention is produced by performing a process of (i) coating and/or impregnating a porous support with the composition for forming an ion exchange membrane used in the present invention and a process of (ii) irradiating the composition for forming an ion exchange membrane with light and causing a polymerization curing reaction in the composition through heating as necessary.

### [Irradiation with energy rays]

In the above-described production unit, the composition coating unit for forming an ion exchange membrane is provided on the upstream side of the irradiation source and the irradiation source is disposed on the upstream side of the film winding unit.

At the time of application using a high-speed coating machine, from the viewpoint of having sufficient fluidity, the viscosity of the composition for forming an ion exchange membrane used in the present invention at 35°C is preferably less than 4,000 mPa·s, more preferably in a range of 1 to 1,000 mPa·s, and most preferably in a range of 1 to 500 mPa·s. In a case of slid bead coating, the viscosity thereof at 35°C is preferably in a range of 1 to 100 mPa·s.

In the high-speed coating machine, a moving support can be coated with a coating solution which is the composition for forming an ion exchange membrane at a speed of faster than 15 m/min and can be also coated at a speed of faster than 20 m/min.

Particularly in a case where a support is used to increase the mechanical strength, the support may be subjected to a corona discharge treatment, a glow discharge treatment, a flame treatment, or an ultraviolet irradiation treatment in order to improve wettability and adhesive force of the support before the surface of the support is coated with the composition for forming an ion exchange membrane used in the present invention.

The polymerization and curing of the composition for forming an ion exchange membrane used in the present invention is started in preferably 60 seconds, more preferably 15 seconds, particularly preferably 5 seconds, and most preferably 3 seconds after the support is coated or impregnated with the composition for forming an ion exchange membrane.

The irradiation with light for the polymerization and curing of the composition is carried out for preferably less than 10 seconds, more preferably less than 5 seconds, particularly preferably less than 3 seconds, and most preferably less than 2 seconds. The irradiation with light is continuously carried out in a case of the continuous method and the time for the polymerization curing reaction is determined in consideration of the speed at which the composition for forming an ion exchange membrane moves through irradiation beams.

Since a large amount of heat is generated in a case where ultraviolet rays (UV light) with high intensity are used for the polymerization curing reaction, it is preferable that a lamp serving as a light source and/or a support and/or the membrane are cooled with cooling air in order to prevent overheating. In a case where a significant amount of ultraviolet rays (IR light) are applied together with UV beams, UV light is applied using an IR reactive quartz plate as a filter.

Ultraviolet rays are preferable as energy rays. It is preferable that the irradiation wavelength is compatible with an absorption wavelength of an arbitrary photopolymerization initiator included in the composition for forming an ion exchange membrane and UV-A (400 to 320 nm), UV-B (320 to 280 nm), and UV-C (280 to 200 nm) may be exemplified.

Examples of UV sources include a mercury arc lamp, a carbon arc lamp, a low-pressure mercury lamp, a medium-pressure mercury lamp, a high-pressure mercury lamp, a swirling flow plasma arc lamp, a metal halide lamp, a xenon lamp, a tungsten lamp, a halogen lamp, a laser light emitting diode, and an ultraviolet light emitting diode. A medium-pressure or high-pressure mercury vapor type ultraviolet light emitting lamp is particularly preferable. In addition, in order to modify the emission spectrum of a lamp, additives such as a metal halide may be present. A lamp with maximum emission at a wavelength of 200 to 450 nm is particularly suitable.

The energy output of the irradiation source is preferably in a range of 20 to 1,000 W/cm and more preferably in a range of 40 to 500 W/cm, and the exposure amount may be low or high if a desired exposure amount can be realized. The polymerization and curing of the membrane are adjusted by exposure intensity. The exposure amount is measured in the range of UV-A shown by a device using High Energy UV Radiometer (UV Power Puck^{™}, manufactured by EIT-Instrument Markets) and is preferably at least 40 mJ/cm² or greater, more preferably in a range of 100 to 2,000 mJ/cm², and most preferably in a range of 150 to 1,500 mJ/cm². The exposure time can be freely selected, but is preferably short and most preferably less than 2 seconds.

Moreover, in a case where the coating speed is high, a plurality of light sources may be used in order to obtain the exposure amount which is required. In this case, the exposure intensities of the plurality of light sources may be the same as or different from each other.

### (Preparation of surface layer)

The surface layer is formed by performing a process of (i') coating one or both surfaces of the above-described prepared ion exchange membrane with the composition for forming a surface layer used in the present invention and a process of (ii') irradiating the composition for forming a surface layer with light and causing a polymerization curing reaction in the composition through heating as necessary. These processes (i') and (ii') are the same as the processes (i) and (ii) in the preparation of an ion exchange membrane except the description related to the support.

Further, in order to improve adhesiveness of the ion exchange membrane to the surface layer, the surface of the ion exchange membrane may be subjected to a roughening treatment using sand paper or the like, a corona treatment, or a plasma treatment, as a pre-treatment of the application of the composition for forming a surface layer.

### «Applications of functional polymer membrane»

The functional polymer membrane of the present invention is mainly intended to be particularly used for ion exchange. However, the functional polymer membrane of the present invention is not limited to ion exchange and can be suitably used for reverse osmosis and gas separation.

As described above, the functional polymer membrane of the present invention is useful as an ion exchange membrane that selectively transmits monovalent ions, can be used for electrodeionization, continuous electrodeionization, electrodialysis, electrodialysis reversal, and reverse electrodialysis, and can be used for not only general purpose but also medical applications. Recently, the functional polymer membrane can be used for a solid polymer electrolyte fuel cell.

Further, the applications of the functional polymer membrane of the present invention are not particularly limited, but the functional polymer membrane can be used for a device and the like in the form of a single functional polymer membrane or a stack.

Here, the term "stack" indicates a module in which an anion exchange membrane and a cation exchange membrane are alternately disposed between a pair of electrodes. In the present invention, a functional polymer membrane having the surface layer and the anion exchange membrane of the present invention is used as this anion exchange membrane and a functional polymer membrane having the surface layer and the cation exchange membrane of the present invention is used as this cation exchange membrane.

### Examples

Hereinafter, the present invention will be described in detail based on examples, but the present invention is not limited thereto. Further, "part" and "%" are on a mass basis unless otherwise noted.

### [Synthesis of polymerizable compounds 1 to 4 (cross-linking agents)

### -Synthesis ofpolymerizable compound 1-

A polymerizable compound 1 was synthesized according to the following synthesis scheme.

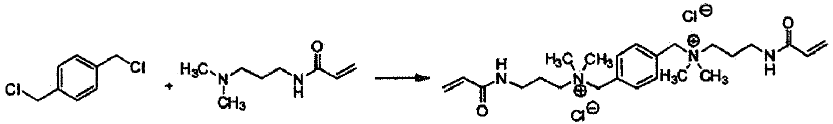

313 g of N-[3-(dimethylamino)propyl]acrylamide (2.00 mol, manufactured by Tokyo Chemical Industry Co., Ltd.) was added to a mixed solution of 175 g of para-dichloroxylene (1.00 mol, manufactured by Tokyo Chemical Industry Co., Ltd.), 1,220 g of acetonitrile, 244 g of methanol, 1 g of t-butyl hydroperoxide (manufactured by Tokyo Chemical Industry Co., Ltd.), and the solution was heated and stirred at 50°C for 2 hours. Next, 1,220 g of acetone was added to the solution, the solution was stirred at room temperature for 1 hour, and the resulting crystals were filtered, thereby obtaining 450 g (yield of 92%) of white crystals of the polymerizable compound 1.

### -Synthesis of polymerizable compound 2-

A polymerizable compound 2 was synthesized according to the following synthesis scheme.

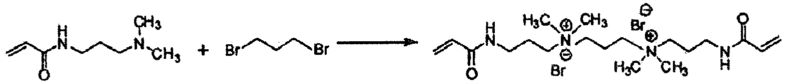

125 g of N-[3-(dimethylamino)propyl]acrylamide (0.80 mol, manufactured by Wako Pure Chemical Industries, Ltd.) was added to a mixed solution of 80.8 g of 1,3-dibromopropane (0.40 mol, manufactured by Wako Pure Chemical Industries, Ltd.), 0.617 g of methoxyphenol (manufactured by Wako Pure Chemical Industries, Ltd.), and 309 ml of acetonitrile, 103 ml of methanol, and the solution was heated and stirred at 50°C for 7 hours. Next, 2.2 L of acetone was added to the solution, the supernatant was removed by decantation, and 0.1 g of methoxyphenol and 30 g of water were added thereto, and then the solution was concentrated at 35°C (40 mmHg) for 30 minutes, thereby obtaining 188 g (moisture content of 19 g, yield of 74%) of a 81% solution of the polymerizable compound 2.

### -Synthesis of polymerizable compound 3-

A polymerizable compound 3 was synthesized according to the following synthesis scheme.

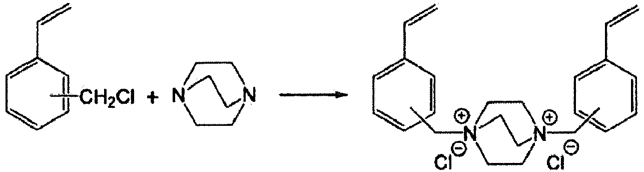

1,4-diazabicyclo[2.2.2]octane (1.00 mol, manufactured by Wako Pure Chemical Industries, Ltd.) was added to a mixed solution of 321 g of chloromethylstyrene (2.10 mol, CMS-P, manufactured by AGC Seimi Chemical Co., Ltd.), 1.30 g of 2,6-di-t-butyl-4-methylphenol (manufactured by Wako Pure Chemical Industries, Ltd.), and 433 g of acetonitrile, and the solution was heated and stirred at 80°C for 15 hours.

The resulting crystals were filtered, thereby obtaining 405 g (yield of 97%) of white crystals of the polymerizable compound 3.

### -Synthesis of polymerizable compound 4-

A polymerizable compound 4 was synthesized according to the following synthesis scheme.

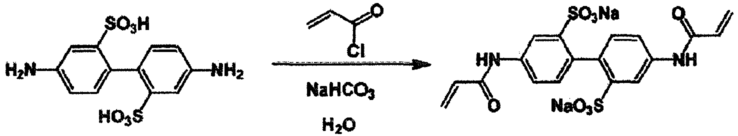

288.29 g (3.43 mol) of sodium hydrogen carbonate (product number: 195-01303, manufactured by Wako Pure Chemical Industries, Ltd.) and 1,343 mL of ion exchange water were added to a 5 L three-necked flask and the solution was stirred at room temperature. Next, 268.6 g (0.78 mol) of benzidine-2,2'-disulfonic acid (product number: B0395, manufactured by Tokyo Chemical Industry Co., Ltd.) was slowly added to the solution. The resulting solution was stirred at room temperature for 30 minutes, cooled under ice-cold conditions, and then continuously stirred. 138.7 mL (1.53 mol) of acryloyl chloride (product number: 013-12485, manufactured by Wako Pure Chemical Industries, Ltd.) was slowly added dropwise to the solution which was cooled under ice cold conditions such that the temperature in the system was maintained to 10°C or lower. After dropwise addition, the resulting solution was stirred for 1 hour under ice cold conditions and then stirred at room temperature for 3 hours. 2,686 mL of isopropyl alcohol was slowly added to the reaction mixture and then the resulting insoluble matter was removed by filtration. The obtained filtrate was moved to a 30 L bucket made of stainless steel and stirred at room temperature, and then 10,744 mL of isopropyl alcohol was slowly added to the filtrate. The obtained crystals were filtered and washed with 1,074 mL of a mixed solution of isopropyl alcohol and water at a mixing ratio of 5:1, thereby obtaining 339 g (yield: 87%) of a target polymerizable compound 4. ¹H-NMR data of the polymerizable compound 4 are shown below.
1 H-NMR (300MHz, DMSO-d6)δ:
10.3 (s, 2H), 8.09 (d, J = 2.4Hz, 2H), 7.71 (dd, J = 2.4, 8.4Hz, 2H), 7.16 (d, J = 8.4Hz, 2H), 7.71 (dd, J = 2.4, 8.4Hz, 2H)

### -Synthesis of polymerizable compound 5-

A polymerizable compound 5 was synthesized according to the following synthesis scheme.

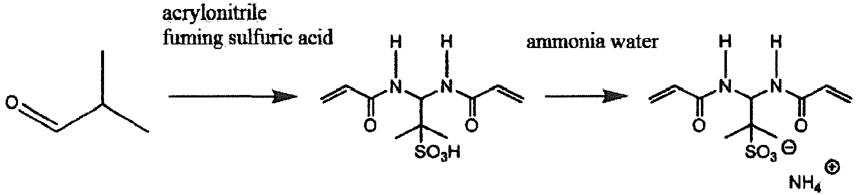

1.47 L (22.5 mol) of acrylonitrile (product number: 014-00386, manufactured by Wako Pure Chemical Industries, Ltd.) and 275 mL (3.00 mol) of isobutyl-aldehyde were added to a 5 L three-necked flask and the solution was cooled to -10°C or lower using an ice/methanol water bath. 148 mL (3.00 mol, containing 25% of sulfur trioxide) of fuming sulfuric acid (product number: 197-05305, manufactured by Wako Pure Chemical Industries, Ltd.) was slowly added to the solution such that the temperature in the reaction system was maintained to 5°C or lower. When the reaction solution was slowly heated at 35°C after the addition, a solid was generated. The mixture was stirred for 3 hours and 3 L of acetonitrile was added. The generated solid was filtered and washed with acetone (product number: 013-00356).

The recovered filtrate described above was added to a 5 L three-necked flask and 226 mL of methanol (product number: 133-16391, manufactured by Wako Pure Chemical Industries, Ltd.) was poured thereto. After the mixture was cooled to 5°C or lower using an ice bath, ammonia water (containing approximately 25% ammonia) (product number: 013-17505, manufactured by Wako Pure Chemical Industries, Ltd.) was slowly added thereto such that the temperature of the reaction system was maintained to 20°C or lower. After the addition, 3 L of acetone was added thereto. The solid was filtered, washed with acetone, and dried by slowly being heated to 40°C, thereby obtaining 360 g (yield: 39%) of a target polymerizable compound 5.

### (Preparation of anion exchange membrane (a-1))

An aluminum plate was manually coated with a coating solution having the composition (unit: g) listed in the following Table 1 at a speed of approximately 5 m/min using a 150 µm wire winding rod and then non-woven fabric (FO-2223-10, manufactured by Freudenberg, thickness of 100 µm) was impregnated with the coating solution. The extra coating solution was removed using a rod which was not wound around with a wire. The temperature of the coating solution at the time of coating was approximately 25°C (room temperature). The support impregnated with the coating solution was subjected to a polymerization curing reaction using a UV exposure machine (model: LIGHT HAMMER 10, manufactured by Fusion UV System Corporation, D-valve, conveyor speed: 9.5 m/min, 100% strength), thereby preparing an anion exchange membrane. The exposure amount in a UV-A region was 1,000 mJ/cm². The obtained membrane was removed from the aluminum plate and was stored in a 0.1 M NaCl solution for at least 12 hours.

### (Preparation of anion exchange membranes (a-2) to (a-6) and cation exchange membranes (c-1) to (c-3))

Anion exchange membranes (a-2), (a-4), and (a-5) and cation exchange membranes (c-1) and (c-2) were respectively prepared in the same manner as the anion exchange membrane (a-1), so as to have the film thickness listed in the following Table 2, except that the compositions were changed to the compositions listed in the following Table 1. Anion exchange membranes (a-3) and (a-6) and a cation exchange membrane (c-3) were prepared by changing non-woven fabric (FO-2223-10, manufactured by Freudenberg, thickness of 100 µm) to non-woven fabric (FO-2226-14, manufactured by Freudenberg, thickness of 160 µm), the compositions to the composition listed in the following Table 1, and the film thicknesses to the film thicknesses listed in the following Table 2.

### (Preparation of functional polymer membrane)

### (Example 1)

An anion exchange membrane having a dimension of a length of approximately 5 cm and a width of approximately 5 cm was cut out from the prepared anion exchange membrane (a-1) and one surface of the cut-out anion exchange membrane (a-1) was spin-coated with a coating solution for forming a surface layer (C-1) having the composition listed in the following Table 1 at a rotational speed of 3,000 rpm for 30 seconds using a spinner ASC-4000 (trade name, manufactured by ActesKyosan Inc.). The temperature of the coating solution at the time of spin-coating was approximately 25°C (room temperature). The coating solution was subjected to a polymerization curing reaction using a UV exposure machine (model: LIGHT HAMMER 10, manufactured by Fusion UV System Corporation, D-valve, conveyor speed: 9.5 m/min, 100% strength), thereby preparing a functional polymer membrane, Example 1, having the surface layer (C-1) of formed on one surface thereof. The exposure amount in a UV-A region was 1,000 mJ/cm².

### (Examples 2 to 15 and Comparative Examples 1 and 2)

Functional polymer membranes of Examples 2 to 15 and Comparative Examples 1 and 2 were prepared in the same manner as in Example 1 except that the types and the compositions of the ion exchange membranes and the surface layers were changed to the types and the compositions of the ion exchange membranes and the surface layers listed in the following Table 1 and the rotational speed of the spinner ASC-4000 was adjusted to be in a range of 500 to 3,000 rpm for 30 seconds in the preparation of the anion exchange membrane of Example 1.

Further, in Examples 2 to 14 and Comparative Examples 1 and 2, a surface layer was formed on one surface of the cut-out ion exchange membrane. Meanwhile, in Example 15, the same surface layer was formed on both surfaces of the cut-out ion exchange membrane.

**[Table 1]**

| | | Anion exchange membrane a-1 | Anion exchange membrane a-2 | Anion exchange membrane a-3 | Anion exchange membrane a-4 | Anion exchange membrane a-5 | Anion exchange membrane a-6 | Cation exchange membrane c-1 | Cation exchange membrane c-2 | Cation exchange membrane c-3 | Surface layer C-1 | Surface layer C-2 | Surface layer C-3 | Surface layer A-1 | Surace layer A-2 | Surface layer A-3 |
|---|---|---|---|---|---|---|---|---|---|---|---|---|---|---|---|---|
| Solvent | Pure water | 20.2 | 10.5 | 30.0 | 20.6 | 20.6 | 20.6 | 16.0 | 22.9 | 22.9 | 16.0 | 22.9 | 22.0 | 20.2 | 10.5 | 30.0 |
| | IPA | 5.1 | - | - | 8.4 | 8.4 | 8.4 | 5.8 | 9.1 | 9.1 | 5.8 | 9.1 | - | 5.1 | - | - |
| Polymerization inhibitor | MEHQ | 0.08 | 0.08 | - | 0.02 | 0.02 | 0.02 | - | - | - | - | - | - | 0.08 | 0.08 | - |
| | 4-OH TEMPO | - | - | - | - | - | - | - | - | - | - | - | 0.10 | - | - | - |
| | Genorad16 | - | - | - | - | - | - | 0.38 | 0.02 | 0.02 | 0.38 | 0.02 | - | - | - | - |
| Catalyst | LiNO₃ | - | - | - | 20.4 | 20.4 | 20.4 | - | - | - | 6.4 | - | 6.40 | - | - | - |
| | LiOH·H₂O | - | - | - | - | - | - | - | 8.46 | 8.46 | - | 8.5 | - | - | - | - |
| Monomer | DMAPAA-Q | 13.5 | 4.1 | - | 40.00 | 40.00 | 40.00 | - | - | - | - | - | - | 13.5 | 4.1 | - |
| | VBTMAC | - | - | 23.2 | - | - | - | - | - | - | - | - | - | - | - | 23.2 |
| | AMPS | - | - | - | - | - | - | 32.3 | 42.6 | 42.6 | 32.3 | 42.6 | 34.5 | - | - | - |
| Cross-linking agent | MBA | - | - | - | 9.90 | 9.90 | 6.90 | - | 16.01 | 13.01 | - | 16.0 | - | - | - | - |
| | SR259 | - | - | - | 3.00 | - | 3.00 | - | - | 3.00 | - | - | - | - | - | - |
| | Polymerizable compound 1 | 60.5 | - | - | - | - | - | - | - | - | - | - | - | 60.5 | - | - |
| | Polymerizable compound 2 | - | 85.1 | - | 85.10 | - | - | - | - | - | - | - | - | - | 85.1 | - |
| | Polymerizable compound 3 | - | - | 46.1 | - | - | - | - | - | - | - | - | - | - | - | 46.1 |
| | Polymerizadble compound 4 | - | - | - | - | - | - | 39.0 | - | - | 39.0 | - | - | - | - | - |
| | Polymerizable compound 5 | - | - | - | - | - | - | - | - | - | - | - | 36.50 | - | - | - |
| Photopolymeriz ation initiator | Darocur 1173 | 0.42 | 0.42 | 1.0 | 0.70 | 0.70 | 0.70 | 0.50 | 0.92 | 0.92 | 0.50 | 0.92 | 0.92 | 0.42 | 0.42 | 1.0 |
| Support | Non-woven fabric | FO-2223-1 0 | FO-2223-1 0 | FO-2226-1 4 | FO-2223-1 0 | FO-2223-1 0 | FO-2226-1 4 | FO-2223-1 0 | FO-2223-1 0 | FO-2226-1 4 | - | - | - | - | - | - |

| | | | | | | | | | | | | | | | | |
|---|---|---|---|---|---|---|---|---|---|---|---|---|---|---|---|---|
| "-" indicates that the ion exchange membrane or the surface layer does not contain components. | | | | | | | | | | | | | | | | |

### [Description of abbreviations in Table 1]

IPA: isopropyl alcohol (manufactured by Wako Pure Chemical Industries, Ltd.)
MEHQ: monomethyl ether hydroquinone (manufactured by Sigma-Aldrich Co., LLC.)
4-OH TEMPO: 4-hydroxy-2,2,6,6-tetramethylpyperidine-1-oxyl (manufactured by Tokyo Chemical Industry Co., Ltd.)
Genoradl6: trade name, manufactured by Rahn AG
DMAPAA-Q: dimethylaminopropylacrylamide methyl chloride quaternary salt (3-acrylamidepropyl trimethylammonium chloride) (manufactured by Kohjin Co., Ltd.)
VBTMAC: vinylbenzyltrimethylammonium chloride (trade name: (vinylbezyl)trimethylammonium chloride, manufactured by Sigma-Aldrich Co., LLC.)
AMPS (registered trademark): 2-acrylamide-2-methylpropanesulfonic acid (manufactured by Lubrizol Ltd.)
MBA: methylene bisacrylamide (manufactured by Tokyo Chemical Industry Co., Ltd.)
SR259: polyethylene glycol acrylate (manufactured by Sartomer Company Inc.)
Darocur (registered trademark) 1173: manufactured by BASF Japan Ltd.

### [Method of measuring film thickness]

A film was immersed in 0.1 M NaCl aqueous solution at 25°C for 12 hours and then removed therefrom, water on the surface was wiped off, and then the thickness thereof was measured using a micrometer.

### [Measurement of electrical resistance ER (Ω·cm2) of film]

Both surfaces of a film immersed in a 0.5 M NaNO₃ aqueous solution for approximately 2 hours were wiped using dry filter paper and the film was interposed between two chambers of a cell (effective film area of 1 cm², a Ag/AgCl reference electrode (manufactured by Metrohm Ltd.) was used as an electrode). Both chambers were respectively filled with 100 mL of NaNO₃ aqueous solutions with the same concentration and allowed to stand in a constant temperature water tank at 25°C until the both chambers reached equilibrium, electrical resistance r₁ was measured using an AC bridge (frequency of 1,000 Hz) after the liquid temperature in the cell reached 25°C. The film was removed so that only the 0.5 M NaNO₃ aqueous solution was left, electrical resistance r₂ between electrodes was measured, and electrical resistance r of the film was acquired using rl- r2. This was set to electrical resistance ER (0.5 M NaNO₃).

The electrical resistance ER (0.5 M NaNO₃) and the electrical resistance ER (0.5 M Na₂SO₄) of a film were measured in the same manner as the electrical resistance ER (0.5 M MgCl₂) of a film. The measurement results are listed in the following Table 2. Further, the electrical resistance ER of a film was abbreviated as "ER" in the following Table 2.

### [Peeling resistance of surface layer]

The functional polymer membranes prepared in Example 1 and Comparative Example 2 were irradiated with ultrasonic waves for 60 minutes using an ultrasonic cleaner US-4 (manufactured by ASONE Corporation) and then the electrical resistances of the above-described membranes were measured. The results are listed in the following Table 2.

Further, in the following Table 2, the functional polymer membranes after irradiation with ultrasonic waves were set as Example 1A and Comparative Example 2A.

Here, in the following Table 2, "-" in component items indicates that the component items were not contained and "-" in evaluation items indicates that the evaluations were not performed.

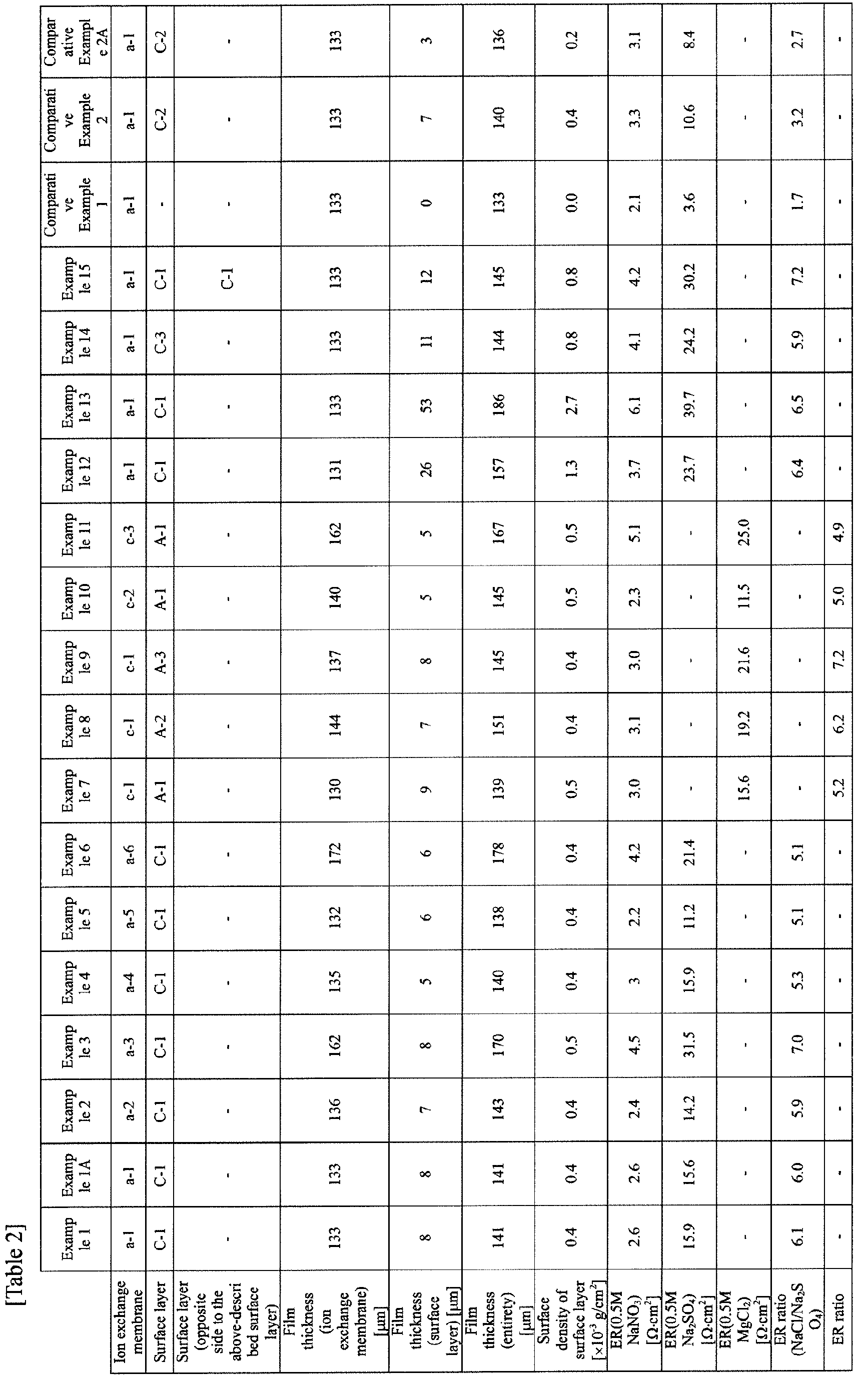

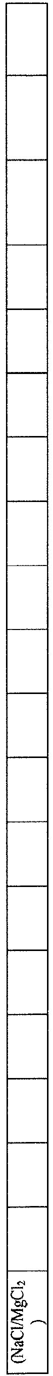

The ER ratios of Examples 1 to 15 are larger than the ER ratio of Comparative Example 1 in which the surface layer defined in the present invention is not included. Further, even when the surface layer is included, the ER ratio of Example 1 was greatly excellent compared to the ER ratio of Comparative Example 2 in which the surface layer does not contain a polymer having the cross-linked structure defined in the present invention. Therefore, it is understood that the functional polymer membrane of the present invention with a charged cross-linking monomer is excellent in selective permeability of monovalent ions.

Further, it is understood that the ER ratios are approximately the same as each other when Examples 1, 12, and 13 are compared. However, the ER (0.5 M NaNO₃) of Example 1 is smaller than the ER (0.5 M NaNO₃) of Examples 12 and 13. Therefore, it is understood that the functional polymer membrane is excellent in terms that the electrical resistance of the membrane was suppressed when the thickness of the surface layer is in the preferable range of the present invention.

Further, since the ER ratio of Example 15 is slightly larger than the ER ratio of Example 1, the selective permeability of monovalent ions of Example 15 is excellent compared to the selective permeability of Example 1. However, since the ER (0.5 M NaNO₃) of Example 1 is smaller than the ER (0.5 M NaNO₃) of Example 15, it is understood that the ER ratio and the ER are in the trade-off relationship in formation of one surface or both surfaces of the surface layer.

As described above, in the functional polymer membrane of the present invention, the electrical resistance ER of divalent ions is increased while suppressing an increase in electrical resistance ER of monovalent ions. In other words, monovalent ions are transmitted and divalent ions are not transmitted, which means that selective transmission becomes possible.

When Examples 1 and 1A are compared to each other, the ER and the ER ratio before and after the irradiation with ultrasonic waves do not fluctuate much. Therefore, it is understood that the functional polymer membrane of the present invention has a surface layer which is not peeled off when irradiated with ultrasonic waves and has excellent peeling resistance. On the contrary, even when the surface layer is included, it is understood that the ER (0.5 M Na₂SO₄) and the ER ratio are decreased before and after the irradiation with ultrasonic waves from the comparison of Comparative Example 2 with Comparative Example 2A, in which the surface layer does not contain a polymer having the cross-linked structure defined in the present invention. This decrease is caused by the surface layer being peeled off from the ion exchange membrane when irradiated with ultrasonic waves.

The present invention has been described with reference to embodiments, but any detailed description of the invention is not intended to be limited unless otherwise specified. The appended claims should be broadly interpreted within the range not departing from the spirit and the scope of the invention.

The present application claims priority based on Japanese Patent Application No. 2014-165309 filed on August 14, 2014 in Japan and Japanese Patent Application No. 2015-119497 filed on June 12, 2015 in Japan and the contents of which are incorporated herein by reference.

## Claims

1. A functional polymer membrane comprising:
a surface layer; and
an anion exchange membrane or a cation exchange membrane,
wherein the surface layer contains a polymer which includes a cross-linked structure having, in a cross-linking unit, an ionic group with a charge opposite to a charge of an ionic group included in the anion exchange membrane or the cation exchange membrane.

2. The functional polymer membrane according to claim 1,
wherein the polymer which includes the anion exchange membrane and has the cross-linked structure includes an anionic group.

3. The functional polymer membrane according to claim 1 or 2,
wherein the polymer which includes the anion exchange membrane and has the cross-linked structure is a polymer having a cross-linked structure represented by the following Formula (NCL-1) or (NCL-2), 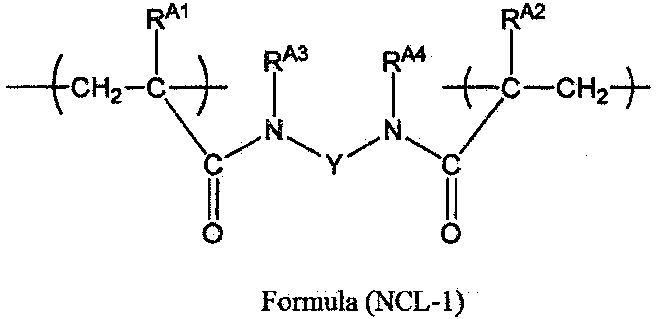
in Formula (NCL-1), R^{A1} and R^{A2} each independently represent a hydrogen atom or an alkyl group, R^{A3} and R^{A4} each independently represent a hydrogen atom or an alkyl group and R^{A3} and R^{A4} may form a 6- or 7-membered ring together with nitrogen atoms and Y adjacent to R^{A3} and R^{A4}, Y represents an alkylene group or an arylene group, R^{A1} to R^{A4} and Y include one to four -SO₃M's in total, and M represents a hydrogen atom, an organic base ion, or a metal ion, 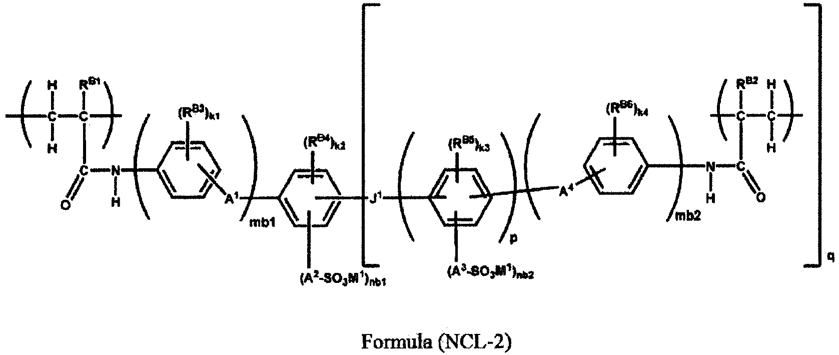 in Formula (NCL-2), R^{B1} and R^{B2} each independently represent a hydrogen atom or an alkyl group, R^{B3}, R^{B4}, R^{B5}, and R^{B6} each independently represent a substituent, k1, k2, k3, and k4 represent an integer of 0 to 4, and in a case where a plurality of R^{B3}'s, R^{B4}'s, R^{B5}'s, and R^{B6}'s are present, R^{B3}'s, R^{B4}'s, R^{B5}'s, and k^{B6,}s may be the same as or different from each other and may be bonded to each other to form a ring, A¹, A², A³, and A⁴ each independently represent a single bond or a divalent linking group, M¹ represents a hydrogen atom, an organic base ion, or a metal ion, nb1 and nb2 each independently represent an integer of 1 to 4, mb1 and mb2 each independently represent 0 or 1, J¹ represents a single bond, -O-, -S-, -SO₂-, -CO-, -CR^{B7}R^{B8}-, or an alkenylene group, R^{B7} and R^{B8} each independently represent a hydrogen atom, an alkyl group, or a halogen atom, p represents an integer of 1 or greater, and q represents an integer of 1 to 4.

4. The functional polymer membrane according to claim 1,
wherein the polymer which includes the cation exchange membrane and has the cross-linked structure includes a cationic group.

5. The functional polymer membrane according to claim 1 or 4,
wherein the polymer which includes the cation exchange membrane and has the cross-linked structure is a polymer having a cross-linked structure represented by the following Formula (PCL-1) or (PCL-2), 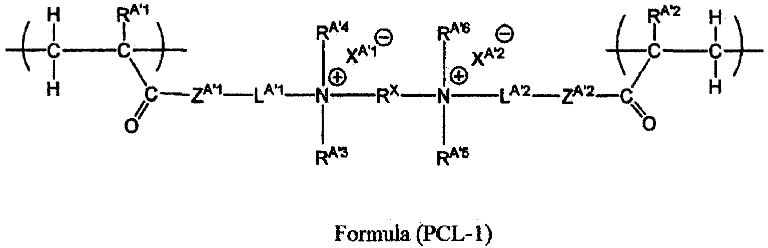
in Formula (PCL-1), R^{A'1} and R^{A'2} each independently represent a hydrogen atom or an alkyl group, R^{A'3} to R^{A'6} each independently represent an alkyl group or an aryl group, Z^{A1} and Z^{A'2} each independently represent -O- or -NRa-, here, Ra represents a hydrogen atom or an alkyl group, L^{A'1} and L^{A'2} each independently represent an alkylene group, R^{X} represents an alkylene group, an alkenylene group, an alkynylene group, an arylene group, -O-, or a divalent linking group formed by combining these, and X^{A'1} and X^{A'2} each independently represent a halogen ion or an aliphatic or aromatic carboxylic acid ion, 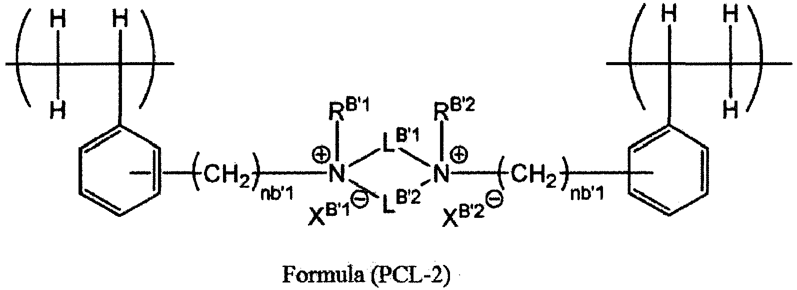 in Formula (PCL-2), L^{B'1} and L^{B'2} each independently represent an alkylene group or an alkenylene group, R^{B'1} and R^{B'2} each independently represent an alkyl group or an aryl group, R^{B'1} and R^{B'2} may be bonded to each other to form a ring, nb'1 represents an integer of 1 to 3, and X^{B'1-} and X^{B'2-} each independently represent an organic or inorganic anion.

6. The functional polymer membrane according to any one of claims 1 to 5,
wherein the surface layer is formed by photopolymerization.

7. The functional polymer membrane according to any one of claims 1 to 6,
wherein the thickness of the surface layer is 50% or less of the thickness of the anion exchange membrane or the cation exchange membrane.

8. The functional polymer membrane according to claim 7,
wherein the thickness of the surface layer is 20% or less of the thickness of the anion exchange membrane or the cation exchange membrane.

9. The functional polymer membrane according to claim 8,
wherein the thickness of the surface layer is 10% or less of the thickness of the anion exchange membrane or the cation exchange membrane.

10. A stack comprising:
the functional polymer membrane according to any one of claims 1 to 9.

11. A device comprising:
the functional polymer membrane according to any one of claims 1 to 9.

12. A method of producing a functional polymer membrane which includes a surface layer and an anion exchange membrane or a cation exchange membrane, the method comprising:
subjecting a polyfunctional polymerizable monomer having an ionic group with a charge opposite to a charge of an ionic group included in the anion exchange membrane or the cation exchange membrane to a polymerization curing reaction in the surface layer to form a polymer which has a cross-linked structure.

## Amended claims

### Amended claims under Art. 19.1 PCT

**1.** (Amended) A functional polymer membrane comprising:
a surface layer; and
an anion exchange membrane or a cation exchange membrane,
in a case where the functional polymer membrane comprises the anion exchange membrane, the surface layer comprises a polymer having a cross-linked structure represented by the following Formula (NCL-1) or (NCL-2), and
in a case where the functional polymer membrane comprises the cation exchange membrane the surface layer comprises a polymer having a cross-linked structure represented by the following Formula (PCL-1) or (PCL-2), 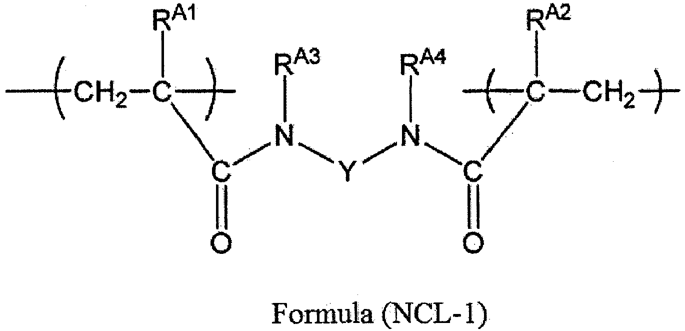 in Formula (NCL-1), R^{A1} and R^{A2} each independently represent a hydrogen atom or an alkyl group, R^{A3} and R^{A4} each independently represent a hydrogen atom or an alkyl group and R^{A3} and R^{A4} may form a 6- or 7-membered ring together with nitrogen atoms and Y adjacent to R^{A3} and R^{A4}, Y represents an alkylene group or an arylene group, R^{A1} to R^{A4} and Y include one to four -SO₃M's in total, and M represents a hydrogen atom, an organic base ion, or a metal ion, 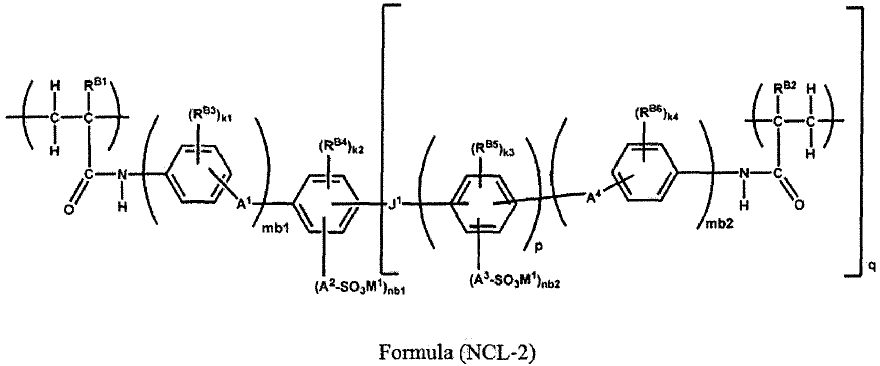
in Formula (NCL-2), R^{B1} and R^{B2} each independently represent a hydrogen atom or an alkyl group, R^{B3}, R^{B4}, R^{B5}, and R^{B6} each independently represent a substituent, k1, k2, k3, and k4 represent an integer of 0 to 4, and in a case where a plurality of R^{B3}'s, R^{B4}'s, R^{B5}'s, and R^{B6}'s are present, R^{B3}'s, R^{B4}'s, R^{B5}'s, and R^{B6}'s may be the same as or different from each other and may be bonded to each other to form a ring, A¹, A², A³, and A⁴ each independently represent a single bond or a divalent linking group, M¹ represents a hydrogen atom, an organic base ion, or a metal ion, nb1 and nb2 each independently represent an integer of 1 to 4, mb1 and mb2 each independently represent 0 or 1, J¹ represents a single bond, -O-, -S-, -SO₂-, -CO-, -CR^{B7}R^{B8}-, or an alkenylene group, R^{B7} and R^{B8} each independently represent a hydrogen atom, an alkyl group, or a halogen atom, p represents an integer of 1 or greater, and q represents an integer of 1 to 4 or more, 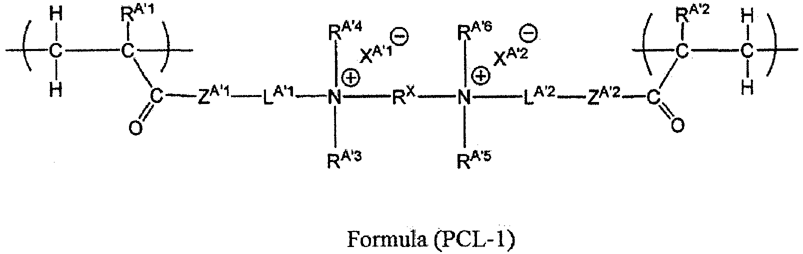 in Formula (PCL-1), R^{A'1} and R^{A'2} each independently represent a hydrogen atom or an alkyl group, R^{A'3} to R^{A'6} each independently represent an alkyl group or an aryl group, Z^{A'1} and Z^{A'2} each independently represent -O- or -NRa-, here, Ra represents a hydrogen atom or an alkyl group, L^{A'1} and L^{A'2} each independently represent an alkylene group, R^{X} represents an alkylene group, an alkenylene group, an alkynylene group, an arylene group, -O-, or a divalent linking group formed by combining these, and X^{A'1} and X^{A'2} each independently represent a halogen ion or an aliphatic or aromatic carboxylic acid ion, 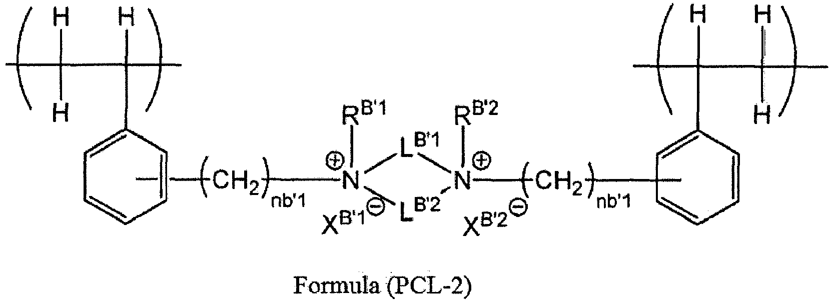 in Formula (PCL-2), L^{B'1} and L^{B'2} each independently represent an alkylene group or an alkenylene group, R^{B'1} and R^{B'2} each independently represent an alkyl group or an aryl group, R^{B''} and R^{B'2} may be bonded to each other to form a ring, nb'1 represents an integer of 1 to 3, and X^{B'1-} and X^{B'2-} each independently represent an organic or inorganic anion.

**2.** Cancelled)

**3.** Cancelled)

**4.** Cancelled)

**5.** Cancelled)

**6.** (Amended) The functional polymer membrane according to claim 1,
wherein the surface layer is formed by photopolymerization.

**7.** (Amended) The functional polymer membrane according to claim 1 or 6,
wherein the thickness of the surface layer is 50% or less of the thickness of the anion exchange membrane or the cation exchange membrane.

**8.** The functional polymer membrane according to claim 7,
wherein the thickness of the surface layer is 20% or less of the thickness of the anion exchange membrane or the cation exchange membrane.

**9.** The functional polymer membrane according to claim 8,
wherein the thickness of the surface layer is 10% or less of the thickness of the anion exchange membrane or the cation exchange membrane.

**10.** (Amended) A stack comprising:
the functional polymer membrane according to any one of claims 1, 6, 7, 8 and 9.

**11.** (Amended) A device comprising:
the functional polymer membrane according to any one of claims 1, 6, 7, 8 and 9.

**12.** (Amended) A method of producing a functional polymer membrane which includes a surface layer and an anion exchange membrane or a cation exchange membrane,
in a case of producing the functional polymer membrane including an anion exchange membrane, the method comprising the step of subjecting a polyfunctional polymerizable monomer having an anionic group to a polymerization curing reaction in the surface layer, thereby to form a polymer having a cross-linked structure represented by the following Formula (NCL-1) or (NCL-2), and
in a case of producing the functional polymer membrane including a cation exchange membrane, the method comprising the step of subjecting a polyfunctional polymerizable monomer having a cationic group to a polymerization curing reaction in the surface layer, thereby to form a polymer having a cross-linked structure represented by the following Formula (PCL-1) or (PCL-2), 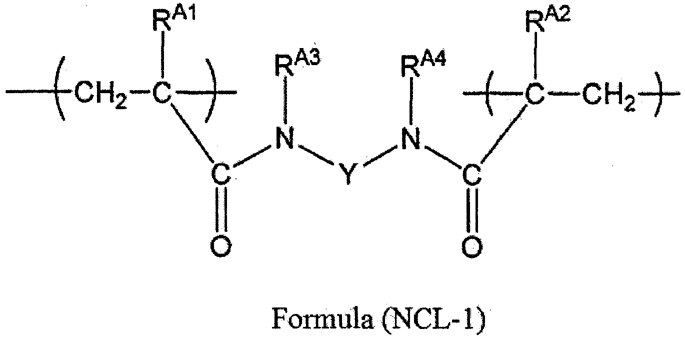 in Formula (NCL-1), R^{A1} and R^{A2} each independently represent a hydrogen atom or an alkyl group, R^{A3} and R^{A4} each independently represent a hydrogen atom or an alkyl group and R^{A3} and R^{A4} may form a 6- or 7-membered ring together with nitrogen atoms and Y adjacent to R^{A3} and R^{A4}, Y represents an alkylene group or an arylene group, R^{A1} to R^{A4} and Y include one to four -SO₃M's in total, and M represents a hydrogen atom, an organic base ion, or a metal ion, 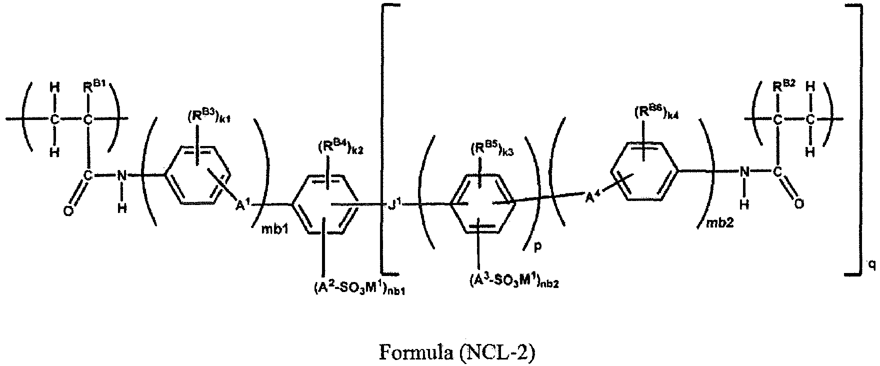 in Formula (NCL-2), R^{B1} and R^{B2} each independently represent a hydrogen atom or an alkyl group, R^{B3}, R^{B4}, R^{B5}, and R^{B6} each independently represent a substituent, k1, k2, k3, and k4 represent an integer of 0 to 4, and in a case where a plurality of R^{B3}'s, R^{B4}'s, R^{B5}'s, and R^{B6}'s are present, R^{B3}'s, R^{B4}'s, R^{B5}'s, and R^{B6}'s may be the same as or different from each other and may be bonded to each other to form a ring, A¹, A², A³, and A⁴ each independently represent a single bond or a divalent linking group, M¹ represents a hydrogen atom, an organic base ion, or a metal ion, nb1 and nb2 each independently represent an integer of 1 to 4, mb1 and mb2 each independently represent 0 or 1, J¹ represents a single bond, -O-, -S-, -SO₂-, -CO-, -CR^{B7}R^{B8}-, or an alkenylene group, R^{B7} and R^{B8} each independently represent a hydrogen atom, an alkyl group, or a halogen atom, p represents an integer of 1 or greater, and q represents an integer of 1 to 4 or more, 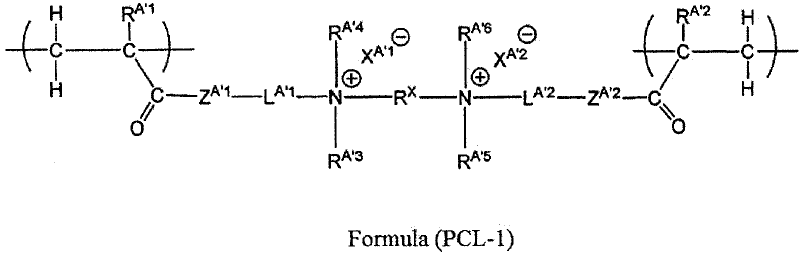 in Formula (PCL-1), R^{A'1} and R^{A'2} each independently represent a hydrogen atom or an alkyl group, R^{A'3} to R^{A'6} each independently represent an alkyl group or an aryl group, Z^{A'1} and Z^{A'2} each independently represent -O- or -NRa-, here, Ra represents a hydrogen atom or an alkyl group, L^{A'1} and L^{A'2} each independently represent an alkylene group, R^{X} represents an alkylene group, an alkenylene group, an alkynylene group, an arylene group, -O-, or a divalent linking group formed by combining these, and X^{A'1} and X^{A'2} each independently represent a halogen ion or an aliphatic or aromatic carboxylic acid ion, 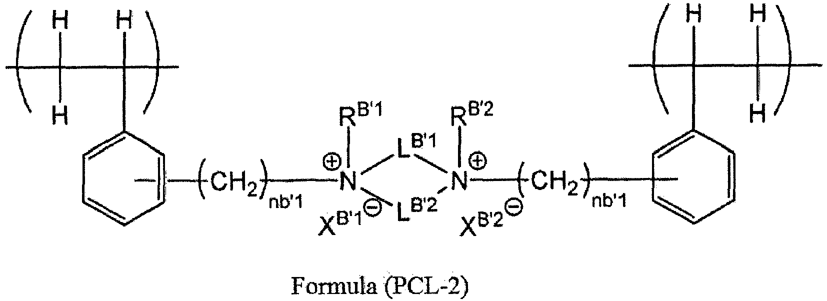 in Formula (PCL-2), L^{B'1} and L^{B'2} each independently represent an alkylene group or an alkenylene group, R^{B'1} and R^{B'2} each independently represent an alkyl group or an aryl group, R^{B'1} and R^{B'2} may be bonded to each other to form a ring, nb'1 represents an integer of 1 to 3, and X^{B'1-} and X^{B'2-} each independently represent an osssssrganic or inorganic anion.
